# EUROPÄISCHE PATENTSCHRIFT

(11) **EP 3 485 211 B1**
(45) Veröffentlichungstag und Bekanntmachung des Hinweises auf die Patenterteilung: **24.11.2021**
(21) Anmeldenummer: 17740653.5
(22) Anmeldetag: 04.07.2017
(51) Int. Cl.: F26B 17/04, B01J 20/30

(54) **ANORDNUNG UND VERFAHREN ZUM TROCKNEN UND ZUM ZERKLEINERN EINES WÄSSRIGEN POLYMERGELS**
APPARATUS AND PROCESS FOR DRYING AND CRUSHING A WATERY POLYMER GEL
APPAREIL ET PROCÉDÉ POUR LE SÉCHAGE ET BROYAGE D'UN GEL POLYMÈRE HUMIDE

(30) Priorität: 15.07.2016 EP 16179778
(43) Veröffentlichungstag der Anmeldung: 22.05.2019
(60) Teilanmeldung: 21202504.3
(73) Patentinhaber: BASF SE, 67056 Ludwigshafen am Rhein (DE)
(72) Erfinder: BENNETT, Andrea Karen, 67056 Ludwigshafen (DE); MCCORMACK, Paul Walter, 67056 Ludwigshafen (DE); ELLIOTT, Mark, 67056 Ludwigshafen (DE)
(74) Vertreter: Eisenführ Speiser
(86) Internationale Anmeldenummer: PCT/EP2017/066633
(87) Internationale Veröffentlichungsnummer: WO 2018/011018

(56) Entgegenhaltungen:
- WO-A1-2014/044780
- WO-A1-2015/074966
- US-A- 4 138 539
- US-A- 4 417 697
- US-A- 4 559 235
- US-A- 5 668 252

## Beschreibung

Die Erfindung betrifft eine Bandtrockneranordnung zum Trocknen eines wässrigen Polymergels und zum Zerkleinern des getrockneten Polymergels zu getrockneten Polymerpartikeln gemäß dem Oberbegriff des Anspruchs 1. Die Erfindung betrifft weiter ein Verfahren zum Trocknen eines wässrigen Polymergels und zum Zerkleinern des getrockneten Polymergels zu getrockneten Polymerpartikeln gemäß dem Oberbegriff des Anspruchs 11 und ein Herstellungsverfahren nach Anspruch 16.

Als wasserabsorbierende bzw. superabsorbierende Polymere (SAP, kurz Superabsorber genannt) bezeichnet man vernetzte hydrophile Polymere, die ein Vielfaches ihrer Masse im trockenen Zustand (teilweise über das Tausendfache) an Flüssigkeiten, wie z.B. Wasser oder dergleichen Flüssigkeiten absorbieren können.

Das Haupteinsatzgebiet von Superabsorbern liegt im Hygienebereich und spielt auch im medizinischen Bereich in Wundauflagen und Pflastern eine bedeutende Rolle. Weitere wichtige Einsatzgebiete für Superabsorber stellen Landwirtschaft und Gartenbau dar, wo Superabsorber eingesetzt werden, um die Fähigkeit von Erde zur Speicherung von Feuchtigkeit zu verbessern.

Die Anforderungen an einen Superabsorber hängen von dem jeweiligen Anwendungsgebiet ab, weshalb die Eigenschaften der Superabsorber (z. B. der Quellungsgrad und die Quellungsgeschwindigkeit) entsprechend angepasst werden müssen. Dafür ist es von Bedeutung, ob die Aufnahme der zu absorbierenden Flüssigkeit bei höherer Temperatur und/oder unter Druck erfolgen soll, was insbesondere für den Einsatz von Superabsorbern in Inkontinenzprodukten wichtig ist. Von großer Bedeutung sind auch Art und Zusammensetzung der zu absorbierenden Flüssigkeit, da der Quellungsgrad eines Superabsorbers stark vom Salzgehalt des Quellungsmittels beeinflusst wird.

Die wasserabsorbierenden Polymere sind insbesondere Polymere aus (co-) polymerisierten hydrophilen Monomeren, Pfropfcopolymere von einem oder mehreren hydrophilen Monomeren auf einer geeigneten Pfropfgrundlage, vernetzte Cellulose oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche wasserabsorbierende Polymere werden zur Herstellung von Windeln, Tampons und Damenbinden, aber auch als wasserzurückhaltende Mittel im landwirtschaftlichen Gartenbau verwendet.

Ein Herstellungsverfahren für wasserabsorbierende Polymerpartikel weist die Schritte auf: Polymerisieren einer wässrigen Monomer-Lösung oder -Suspension zur Herstellung eines Polymergels; Trocknen des wässrigen Polymergels in einem Bandtrockner mit einem Förderband unter Aufnahme des wässrigen Polymergels auf dem Förderband und Fördern des Polymergels auf dem Förderband in eine Förderrichtung; Brechen und/oder Mahlen des getrockneten Polymergels zu Polymerpartikeln.

Ein eingangs genanntes Herstellungsverfahren ist in US 4,138,539 beschrieben, wobei ein zunächst teilweise getrocknetes Polymergel von einem Förderband eines Bandtrockners als Trockenkuchen mit einem Trockenkuchenbrecher zerkleinert wird zu Partikeln bestimmter Größe, um diese weiter zu trocknen.

Eine besondere Art einer eingangs genannten Bandtrockneranordnung ist in US 4,417,697 beschrieben, wobei ein sogenannter "Cutter" dazu dient, das getrocknete Material in Kontakt mit dem Förderband von dem Förderband zu kratzen.

Die Herstellung der wasserabsorbierenden Polymere wird beispielsweise in der Monographie "Modern Super Absorbent Polymer Technology", von F. L. Buchholz und A. T. Graham, Wiley-VCH, 1998 oder in Ullmanns "Encyklopedia of Industrial Chemistry", 6. Auflage, Band 35, Seite 73 bis 103 beschrieben.

Zum Trocknen ist ein Bandtrockner, insbesondere als ein Umluftbandtrockner zur Führung von Umluft, mit einem das Förderband weitgehend umfassenden Trockneraufbau ausgebildet und mit einer am Trockneraufbau luftrückführend anschließenden Luftrückführung gebildet. Dabei wird Rückführluft aus dem Trockneraufbau entnommen und über die Luftrückführung dem Trockneraufbau wieder zugeführt. Die Luftrückführung weist eine Luftentnahmeführung auf, die zwischen einem luftstromaufwärtigen Eintrags-Abschnitt am Trockneraufbau und einem luftstromabwärtigen Austrags-Abschnitt in der Luftrückführung ausgebildet ist.

Ein superabsorbierendes Polymer im Zustand eines wässrigen Polymergels wird als ein in einem nassen Zustand befindlich angesehen und kann insofern auch allgemeiner als Nassgut bezeichnet werden; d.h. das wässrige Polymergel hat immer noch einen beträchtlichen Wasseranteil vor dem Trocknen; insbesondere wie unten beschrieben. Das wässrige Polymergel wird durch Polymerisieren einer Monomer-Lösung oder - Suspension gewonnen. Das wässrige Polymergel von noch wässrigen Polymerpartikeln wird bevorzugt als Granulat, z.B. mit einem Feststoffanteil von 40-60%, in den Bandtrockner eingebracht. In diesem Zustand ist das Polymergel grundsätzlich bereits vernetzt mit einem gewünschten Vernetzungsgrad, insbesondere zunächst homogen vernetzt, insbesondere mit einem vergleichsweise niedrigen Vernetzungsgrad insbesondere zunächst noch kaum oberflächenvernetzt.

Ein superabsorbierendes Polymer im Zustand eines wasserabsorbierenden Polymer-Partikels ist als in einem Zustand nach dem Trocknen befindlich anzusehen; d.h. es hat einen geringen restlichen Wassergehalt der Polymerpartikel nach dem Trocknen des wässrigen Polymergels, insbesondere wie unten beschrieben; also liegt das superabsorbierende Polymer bevorzugt als getrocknetes Polymergel, insbesondere getrocknete Polymerpartikel vor. In diesem Zustand können die wasserabsorbierenden Polymerpartikel bevorzugt nachvernetzt werden, insbesondere oberflächenvernetzt werden, wobei der Oberflächenvernetzungsgrad dann bevorzugt über dem obengenannten vergleichsweise niedrigen zunächst homogenen Vernetzungsgrad liegt. Vorzugsweise wird nach der Polymerisation ein wässriges Polymergel der wasserabsorbierenden Polymere erhalten, das getrocknet wird. Die Grundsätze einer Trocknung des wässrigen Polymergels zu einem wasserabsorbierenden Polymer mit wasserabsorbierenden, insbesondere getrockneten, Polymerpartikeln wird ebenfalls in der Monographie "Modern Super Absorbent Polymer Technology", von F. L. Buchholz und A. T. Graham, Wiley-VCH, 1998, in den Seiten 87 bis 93 beschrieben.

Im Bandtrockner wird das wässrige Polymergel zu einem teilgetrockneten Polymergel getrocknet und liegt insofern als ein Trockenkuchen vor. Der Trockenkuchen liegt bevorzugt als ein Strang von teilgetrockneten Polymergel, also als teilgetrockneter Polymerstrang, auf dem Band des Bandtrockners vor, der sich insofern durch den Trockneraufbau des Bandtrockners erstreckt.

Der Trockenkuchen liegt am Ende des Bandtrockners, d.h. beim Verlassen des Trockneraufbaus, als weitgehend getrockneter Strang von getrocknetem Polymergel, etwa in Form einer Platte oder einem brettartigen Strang, vor - also als getrockneter Polymerstrang. Im Folgenden wird teilweise auf das teilgetrocknete Polymergel und auf das getrocknete Polymergel des Trockenkuchens bereits mit der Begrifflichkeit "getrocknete Polymerpartikel" Bezug genommen; beide Fälle werden mit den Begriffen "superabsorbierendes oder wasserabsorbierendes Polymergel" oder "getrocknetes Polymergel" im Unterschied zu "wässrigem Polymergel" erfasst.

Ein Eintragsmodul des Bandtrockners dient zum Eintragen des superabsorbierenden Polymers in Form der wässrigen Polymerpartikel. In der Praxis werden dann die Trocknungsbedingungen gewählt, die einen Kompromiss zwischen Ausnutzung der Trocknerkapazität und der Verarbeitbarkeit der wasserabsorbierenden Polymerpartikel darstellen. Der Bandtrockner hat im Vergleich zu anderen Trocknerbauarten den Vorteil, dass (bis auf die Schwerkraft) keine wesentliche mechanische Beanspruchung das Produkt beeinträchtigt, da das wässrige Polymergel bzw. die wasserabsorbierenden Polymerpartikel lose auf einem Förderband aufliegen. Prinzipiell bietet ein Bandtrockner die Möglichkeit, eine oder mehrere Kontrollzonen mittels einer oder mehreren Trocknerzonen baulich zu gestalten.

Ein Bandtrockner umfasst beispielsweise ein Produktaufgabemodul für einen Polymereintrag, eine Anzahl von Trocknermodulen zur Bildung einer oder mehrerer Trocknerzonen und ein Austragsmodul für einen Polymeraustrag. Ein Austragsmodul dient zum Austragen des superabsorbierenden Polymers in Form der wasserabsorbierenden Polymerpartikel; insbesondere endet das Förderband im Austragsmodul bzw. hat dort einen Umkehrpunkt. Das superabsorbierende Polymer kann im Austragsmodul am Ende des Bandtrockners auf einen Brecher od. dgl. Zerkleinerer fallen oder kann diesem zugeführt werden. Dazu kann der Trockenkuchen als Ganzes dem Zerkleinerer zugeführt werden oder als Bruch des Trockenkuchens oder als sonstige grobe Brocken des Trockenkuchens. Die getrockneten und noch nicht zerkleinerten Polymerpartikel liegen dann teils als Bruch von getrocknetem Polymergel, z.B. vergleichsweise grobe Brocken, und teils als unvermeidlicher Bruchrest von getrocknetem Polymergel, vor.

Es entstehen danach durchweg zerkleinerte getrocknete Polymerpartikel von getrocknetem Polymergel durch das Zerkleinern im Zerkleinerer. Insbesondere der Bruchrest von getrocknetem Polymergel und Reste infolge des Zerkleinerns umfasst feine Pulverstücke von Polymerpartikeln umfassend Fein- und Feinstpartikel. Die getrockneten und zerkleinerten Polymerpartikel werden nach dem Zerkleinern bevorzugt in eine pneumatische Förderung eingebracht und einem Mahlvorgang zugeführt; also danach zu gemahlenen getrockneten Polymerpartikel weiterverarbeitet.

WO2015/163512 A1 erläutert ein Herstellungsverfahren für Wasser-absorbierende Polymerpartikel, bei dem ein Polymergel getrocknet wird. Nach dem Trocknen wird das getrocknete Polymergel einem ersten Mahlschritt in einer ersten Mahlvorrichtung, dann einer Verweilvorrichtung und dann einem zweiten Mahlschritt in einer zweiten Mahlvorrichtung zugeführt. Die Verweilzeiten in der ersten und zweiten Mahlvorrichtung liegen im Bereich von 3 Minuten und die Verweilzeit in der Verweilvorrichtung bei 30min oder mehr, immer deutlich über einer Verweilzeit in einer Mahlvorrichtung. Durch die Verweilvorrichtung wird vermieden, dass geklumptes Material in die weitere Förderung gelangt. Die Mahlung erfolgt im Hinblick auf Partikelgrößen bei 150µm.

Insbesondere gemahlene getrocknete Polymerpartikel können dann einem Siebvorgang zugeführt werden. Eine Gutkornfraktion hat dann eine schon bevorzugte gewünschte Partikelgröße und kann bereits abgetrennt werden. Eine Überkorn- oder Feinkorn-Fraktion kann ggfs. nochmals gemahlen, gesiebt oder bearbeitet werden und zur Gutkornfaktion hinzugefügt werden. Die getrockneten, gemahlenen und gesiebten Polymerpartikel der Gutkornfraktion können oberflächennachbearbeitet werden. Die getrockneten, gemahlenen und gesiebten und oberflächennachbearbeiteten Polymerpartikel können einer Schutzsiebung zugeführt werden.

Beim Trocknungsverfahren können kontinuierlich arbeitende Konvektionsbandtrockner verwendet werden; im Folgenden betrifft dies einen Bandtrockner, der eingangs genannten Art, insbesondere einen Umluftbandtrockner. Der eingangs genannte Bandtrockner ist für ein wässriges Polymergel, insbesondere zur Bildung eines begrenzt rieselfähigen, stückigen Produkts, besonders ausgebildet. Bei einem kontinuierlich arbeitenden Bandtrockner wird die als durchlüftbares Haufwerk aufgelegte Produktschicht eines wässrigen Polymergels als Polymerstrang auf einem perforierten Förderband durch den Trocknungsraum transportiert und dabei zunächst zu teilgetrocknetem Polymergel und schließlich zu getrocknetem Polymergel eines Trockenkuchens getrocknet; dieses wird dann zu den oben genannten getrockneten Polymerpartikeln als wasserabsorbierende Polymerpartikel weiterverarbeitet.

Das die Produktschicht des Trockenkuchens von teilgetrocknetem Polymergel und dann getrocknetem Polymergel durchströmende Trocknungsgas dient sowohl zum Wärmeeintrag in das zu trocknende wässrige Polymergel bzw. in die teilweise getrockneten wasserabsorbierenden Polymerpartikel als auch zum Abtransport von verdampfender Feuchte. Als Trocknungsgas wird bevorzugt Luft als Trocknungsluft verwendet. Bei einem Umluftbandtrockner wird die die Produktschicht durchströmende Trocknungsluft zudem als Umluft geführt.

Bandtrockner mit Transportbändern sind zu unterscheiden von Bandreaktoren. Während ein Bandreaktor verwendet wird, um wässriges Polymergel aus seinen Herstellungsstoffen zu produzieren wird ein Bandtrockner verwendet, um wasserabsorbierende Polymerpartikel aus einem wässrigen Polymergel zu produzieren, insbesondere um bevorzugt aus einem mit gewünschtem Vernetzungsgrad zunächst homogen vernetzten, ggfs. auch oberflächenvernetzten-wässrigen Polymergel die genannten wasserabsorbierenden Polymerpartikel zu produzieren.

WO2015/074966A1 beschreibt einen Plattenbandtrockner für superabsorbierende Polymere (SAP, kurz Superabsorber genannt) mit einem Zerkleinerer. Solch ein Zerkleinerer in Form eines Kreuzflügelzerkleinerers ist grundsätzlich bekannt und wird zur Zerkleinerung von SAP eingesetzt und ist kommerziell erhältlich. Ein Beispiel ist z.B. aus der Internetdarstellung der Firma Grenzebach ersichtlich, https://www.vumpu.com/de/document/view/6323642/thermische-verfahrenstechnikgrenzebach-maschinenbau-gmbh .

Ein Kreuzflügelzerkleinerer der Anmelderin ist grundsätzlich in Bezug auf eine SAP-Produktion in WO2013/072419 beschrieben .Dieser Kreuzflügelzerkleinerer umfasst eine Welle, an der eine Vielzahl von Barren aufgenommen sind. Neben den auf der Welle angeordneten Barren umfasst der Kreuzflügelzerkleinerer eine Vielzahl fest montierter Barren, die in Zwischenräume der auf der Welle angeordneten Barren eingreifen. Die in den Zerkleinerer eingegebenen Poly(meth)acrylat-Brocken fallen auf die fest montierten Barren und bleiben auf diesen liegen. Durch die sich mit der Welle mitdrehenden Barren werden die Brocken zerschlagen.

In WO2014/044780A1 ist allgemein ein Brecher in Kombination mit einem einstellbaren Leitmittel in Form eines Gitters offenbart, das zusätzlich eine gewisse Zerkleinerung von SAP-Brocken bewirkt.

Wünschenswert ist eine verbesserte Zerkleinerung des getrockneten Polymerstrangs, also des Trockenkuchens oder der groben Bruchstücke des Trockenkuchens, am Ende eines Förderbandes eines Bandtrockners in getrocknete Polymerpartikel. Begründet liegt dies im Wesentlichen darin, dass zum einen die Eigenschaften des getrockneten Polymergels hinsichtlich Härte und Konsistenz variieren können und damit die Zerkleinerungsfähigkeit eines Zerkleinerers unterschiedlich zum Tragen kommt. Andererseits ist es für eine pneumatische Förderung --insbesondere für eine pneumatische Förderung mit einer als Zwischenschritt darin untergebrachten Mahlung und/oder Siebung-- vorteilhaft, dass ein weitgehend vergleichmäßigter Produktstrom von bereits gut zerkleinerten Polymerpartikeln aus dem getrockneten Polymergel zur Verfügung gestellt wird, insbesondere mit vergleichsweise konstanten Parametern in die pneumatische Förderung einbringbar ist.

Eine Aufgabe der Erfindung ist es, eine verbesserte Vorrichtung und ein verbessertes Verfahren zum Trocknen eines wässrigen Polymergels und zum Zerkleinern des getrockneten Polymergels zu getrockneten Polymerpartikeln anzugeben. Insbesondere soll das getrocknete Polymergel als Trockenkuchen nach der Trocknung bzw. nach einem Bandtrockner in verbesserter Weise zu getrockneten Polymerpartikeln zerkleinert werden. Insbesondere sollen die getrockneten Polymerpartikel im Rahmen des verbesserten Zerkleinerungsverfahrens für das getrocknete Polymergel des Polymerstrangs, also des Trockenkuchens, mit einer für eine anschließende pneumatische Förderung und/oder Mahlung optimalen/geeigneten Partikelgrößenverteilung zerkleinert werden. Aufgabe der Erfindung ist es auch, ein verbessertes Herstellungsverfahren zur Herstellung wasserabsorbierender Polymerpartikel anzugeben.

Betreffend die Vorrichtung wird die Aufgabe durch die Erfindung mit einer Bandtrockneranordnung zum Trocknen eines wässrigen Polymergels und zum Zerkleinern des getrockneten Polymergels zu getrockneten Polymerpartikeln gemäß dem Anspruch 1 gelöst.

Die Erfindung geht betreffend die Bandtrockneranordnung zum Trocknen eines wässrigen Polymergels und zum Zerkleinern des getrockneten Polymergels zu getrockneten Polymerpartikeln davon aus, dass die Bandtrockneranordnung aufweist:
- einen Bandtrockner mit einem Trockneraufbau und einem Förderband zur Aufnahme und zum Trocknen des wässrigen Polymergels zu einem Trockenkuchen auf einer Aufnahmefläche des Förderbandes,
- eine Zerkleinerungsanordnung, die in Produktstromrichtung nach dem Trockneraufbau zum Zerkleinern des getrockneten Polymergels des Trockenkuchens oder ggf. Bruchs desselben zu getrockneten zerkleinerten Polymerpartikeln angeordnet ist.

Gemäß Anspruch 1 ist vor allem vorgesehen, dass
- die Zerkleinerungsanordnung einen Zerkleinerer aufweist, der als eine Fräswalze gebildet ist, die
- mit einer oberen Arbeitslinie eines Arbeitsrandes der Fräswalze auf oder oberhalb einer Aufnahmefläche eines Förderbandes zur fräsenden Bearbeitung des Trockenkuchens oder ggf. des Bruchs angeordnet ist, wobei die Fräswalze zum Abwurf von zerkleinerten getrockneten Polymerpartikeln des Trockenkuchens oder Bruchs nach unten ausgebildet ist.

Erfindungsgemäß ist vorgesehen, dass zwischen dem Förderband und der Fräswalze, in Verlängerung des Förderbandes, eine Stütze für den Trockenkuchen oder für den Bruch angeordnet ist, wobei die Stütze so angeordnet ist, dass ein vorderer Abstand zwischen einer vorderen Kante der Stütze und einem hinteren Ende des Förderbandes belassen ist.

Betreffend das Verfahren wird die Aufgabe durch die Erfindung mit einem Verfahren des Anspruchs 11 gelöst.

Die Erfindung geht betreffend das Verfahren von einem Verfahren aus, bei dem ein wässriges Polymergel getrocknet und das getrocknete Polymergel zu getrockneten Polymerpartikeln mit einer Zerkleinerungsanordnung zerkleinert wird. Dazu ist eine Bandtrockneranordnung vorgesehen, die aufweist:
- einen Bandtrockner mit einem Trockneraufbau und einem Förderband zur Aufnahme und zum Trocknen des wässrigen Polymergels zu einem Trockenkuchen auf einer Aufnahmefläche des Förderbandes,
- eine Zerkleinerungsanordnung, die in Produktstromrichtung nach dem Trockneraufbau zum Zerkleinern des getrockneten Polymergels des Trockenkuchens oder ggf. Bruchs desselben zu getrockneten zerkleinerten Polymerpartikeln angeordnet ist.

Gemäß Anspruch 11 ist vor allem vorgesehen, dass
- die Zerkleinerungsanordnung einen Zerkleinerer umfasst, der als eine Fräswalze ausgebildet ist, wobei in dem Verfahren:
- das getrocknete Polymergel des Trockenkuchens zu getrockneten zerkleinerten Polymerpartikeln zerkleinert wird, wobei
- mit einer oberen Arbeitslinie eines Arbeitsrandes der Fräswalze auf oder oberhalb einer Aufnahmefläche eines Förderbandes der Trockenkuchen oder ggf. Bruch desselben fräsend bearbeitet wird und die Fräswalze die zerkleinerten getrockneten Polymerpartikeln des Trockenkuchens oder Bruchs nach unten abwirft.

Erfindungsgemäß ist vorgesehen, dass zwischen dem Förderband und der Fräswalze, in Verlängerung des Förderbandes, eine Stütze für den Trockenkuchen oder für den Bruch angeordnet ist, wobei die Stütze so angeordnet ist, dass ein vorderer Abstand zwischen einer vorderen Kante der Stütze und einem hinteren Ende des Förderbandes belassen ist.

Unter einer Arbeitslinie eines Arbeitsrandes der Fräswalze ist die Tangente am oberen Scheitelpunkt des Arbeitsrandes der Fräswalze zu verstehen. Entsprechend ist unter einer unteren Arbeitslinie der Fräswalze eine Tangente am unteren Scheitelpunkt des Arbeitsrandes der Fräswalze zu verstehen. Der Arbeitsrand ist zu verstehen als derjenige äußere Rand der Fräswalze, der am Trockenkuchen arbeitet; also insbesondere der kreisförmige Rand, welcher die Funktionselemente einhüllt und dessen Radius durch das äußere Ende von Funktionselementen der Fräswalze vorgegebene ist.

Gemäß dem Konzept der Erfindung ist also vereinfacht gesagt eine Fräswalze auf Höhe oder oberhalb der Höhe eines Förderbandes zur fräsenden Bearbeitung des Trockenkuchens und Abwurf von abgefrästen getrockneten Polymerpartikel des Trockenkuchens nach unten angeordnet.

Die Erfindung geht von der Überlegung aus, dass eine verbesserte Zerkleinerung von getrockneten Polymerpartikeln des getrockneten Polymerstrangs, insbesondere des Trockenkuchens oder ggf. Bruchs des Trockenkuchens, auf dem Förderband, am Ende eines Förderbandes eines Bandtrockners mit nur einem Kreuzflügelzerkleinerer problematisch ist bzw. kaum zu erreichen ist.

Ausgehend von dieser Überlegung hat die Erfindung erkannt, dass die Fräswalze besser auf eine Verteilung von Polymerpartikeln im Trockenkuchen und Bruch des Trockenkuchens unmittelbar nach dem Förderband einerseits abgestimmt werden kann und andererseits das Produkt von gut bzw. fein zerkleinerten getrockneten Polymerpartikeln unabhängig davon hinsichtlich der Bedürfnisse der pneumatischen Förderung und/oder einer Mahlung abgestimmt werden kann.

Die Erfindung führt auch auf ein Herstellungsverfahren nach Anspruch 16.

Das Herstellungsverfahrens zur Herstellung wasserabsorbierender Polymerpartikel, weist gemäß der Erfindung die Schritte auf:
- Polymerisation einer Monomer-Lösung oder -Suspension zu wasserabsorbierenden Polymerpartikeln eines wässrigen Polymergels, wobei die Lösung enthält
   a) mindestens ein ethylenisch ungesättigtes, säuregruppentragendes Monomer, das zumindest teilweise neutralisiert sein kann,
   b) mindestens einen Vernetzer,
   c) mindestens einen Initiator,
   d) optional ein oder mehrere mit den unter a) genannten Monomeren copolymerisierbare ethylenisch ungesättigte Monomere und
      optional ein oder mehrere wasserlösliche Polymere,
- Fördern des wässrigen Polymergels zu einer Bandtrockneranordnung.

In dem Herstellungsverfahren ist weiter vorgesehen:
- Trocknen des wässrigen Polymergels und Zerkleinern des getrockneten Polymergels zu getrockneten Polymerpartikeln, erfindungsgemäß mit einer Bandtrockneranordnung nach einem der Ansprüche 1 bis 10, aufweisend:
- einen Bandtrockner mit einem Trockneraufbau und einem Förderband zur Aufnahme und zum Trocknen des wässrigen Polymergels zu einem Trockenkuchen oder Bruch auf einer Aufnahmefläche des Förderbandes,
- eine Zerkleinerungsanordnung, die in Produktstromrichtung nach dem Trockneraufbau zum Zerkleinern des getrockneten Polymergels des Trockenkuchens oder Bruchs zu getrockneten zerkleinerten Polymerpartikeln angeordnet ist, dadurch gekennzeichnet, dass
- die Zerkleinerungsanordnung einen Zerkleinerer aufweist, der als eine Fräswalze gebildet ist, und in dem Verfahren:
- das getrocknete Polymergel des Trockenkuchens zu getrockneten zerkleinerten Polymerpartikeln zerkleinert wird, wobei
- mit einer oberen Arbeitslinie eines Arbeitsrandes der Fräswalze auf oder oberhalb einer Aufnahmefläche eines Förderbandes der Trockenkuchen oder der Bruch fräsend bearbeitet wird und die Fräswalze die zerkleinerten getrockneten Polymerpartikeln des Trockenkuchens oder Bruchs nach unten abwirft, wobei erfindungsgemäß bei der Bandtrockneranordnung vorgesehen ist, dass zwischen dem Förderband und der Fräswalze, in Verlängerung des Förderbandes, eine Stütze für den Trockenkuchen oder für den Bruch angeordnet ist, wobei die Stütze so angeordnet ist, dass ein vorderer Abstand zwischen einer vorderen Kante der Stütze und einem hinteren Ende des Förderbandes belassen ist,
- optional Mahlen und/oder Klassieren der getrockneten und zerkleinerten Polymerpartikel.

Weitere vorteilhafte Weiterbildungen der Erfindung sind den Unteransprüchen zu entnehmen und geben im einzelnen vorteilhafte Möglichkeiten an, das erläuterte Konzept im Rahmen der Aufgabenstellung sowie hinsichtlich weiterer Vorteile zu realisieren.

Vorteilhaft weist der Trockneraufbau ein Förderband zur Aufnahme des wässrigen Polymergels auf dem Förderband und zum Fördern des Polymergels auf dem Förderband in eine Förderrichtung durch den Trockneraufbau auf und einen Polymergeleintrag und einen Polymergelaustrag. Insbesondere weist der Trockneraufbau eine am Trockneraufbau angeschlossene Luftführung zum Fördern von Zuluft und Abluft zum Trocknen des wässrigen Polymergels auf.

Die Zerkleinerungsanordnung ist vorteilhaft produktstromabwärtig eines Polymergelaustrags zum Zerkleinern des getrockneten Polymergels zu getrockneten Polymerpartikeln angeordnet, wobei das getrocknete Polymergel als Trockenkuchen oder Bruchstücke des Trockenkuchens aus getrocknetem Polymergel der Zerkleinerungsanordnung zugeführt und zu getrockneten Polymerpartikeln zerkleinert wird.

Vorzugsweise weist die Fräswalze eine rotierbare Welle mit Funktionselementen auf und das Förderband eine Umlenkrolle auf, wobei die rotierbare Welle zum Rotieren mit einer Drehrichtung entgegen eine Drehrichtung der Umlenkrolle ausgebildet ist. Die derart bevorzugten gegenläufigen Drehrichtungen unterstützen den Abwurf von zerkleinerten getrockneten Polymerpartikeln des Trockenkuchens oder des Bruchs nach unten.

Vorzugsweise ist ein Radius der Fräswalze größer oder gleich der Dicke des Trockenkuchens oder des Bruchs und/oder eine untere Arbeitslinie der Fräswalze liegt unterhalb einer Aufnahmefläche eines Förderbandes. Diese Maßgaben unterstützen, dass der Trockenkuchen oder Bruch praktisch vollständig direkt auf die Fräswalze geführt und von dieser voll erfasst wird. Diese Maßgaben mindern einzeln oder allein insbesondere die Gefahr, dass der Trockenkuchen oder Bruch ganz oder teilweise an der Fräswalze vorbeigeführt wird.

Vorzugsweise liegt die obere Arbeitslinie der Fräswalze oberhalb einer Oberkante des Trockenkuchens oder oberhalb einer Oberkante des Bruchs. Dies unterstützt den Abwurf von zerkleinerten getrockneten Polymerpartikeln des Trockenkuchens oder des Bruchs nach unten.

Vorzugsweise hat die obere Arbeitslinie der Fräswalze einen oberen Abstand zur Aufnahmefläche des Förderbandes und der obere Abstand oberhalb der Höhe der Aufnahmefläche des Förderbandes beträgt wenigstens 5cm, vorzugsweise wenigstens 8cm, vorzugsweise wenigstens 10cm. Dies unterstützt, dass die Fräswalze effizient direkt am Trockenkuchen oder Bruch arbeiten kann. Es ist gewährleistet, dass die Fräswalze mehr oder weniger von oberhalb auf den Trockenkuchen oder Bruch schlägt.

Erfindungsgemäß ist zwischen dem Förderband und der Fräswalze, in Verlängerung des Förderbandes eine Stütze für den Trockenkuchen oder für den Bruch angeordnet. Dies vermeidet, dass Teile des Trockenkuchens und des Bruchs zwischen die Fräswalze und dem Ende des Förderbandes unzerkleinert durchfallen. Zudem werden Schlagkräfte der Fräswalze von der Stütze aufgenommen; es wird vermieden, dass das Förderband und/oder eine hintere Umlenkrolle solche Schlagkräfte aufnehmen muss.

Vorzugsweise ist die Stütze als ein Stütztisch mit einer geschlossenen Stützfläche ausgebildet ist, wobei ein hinterer Abstand zwischen einer hinteren Kante des Stütztisches und einem vorderen Arbeitsrand der Fräswalze belassen ist. Ein Stütztisch hat besonders gute Stützeigenschaften und vermeidet mit seiner geschlossenen Stützfläche effizient, dass Teile des Trockenkuchens und des Bruchs hinter dem Ende des Förderbandes unzerkleinert durchfallen. Der belassene Abstand zwischen einer hinteren Kante des Stütztisches und einem vorderen Arbeitsrand der Fräswalze kann dementsprechend vorteilhaft eingestellt werden.

Vorteilhaft ist die Stütze als ein Stützgitter gebildet, das seitlich, über Zwischenräume beabstandete Stützelemente, insbesondere Stäbe, Barren Stangen oder dergleichen, aufweist. Ein Stützgitter ist relativ einfach realisierbar. Ein Stützgitter kann zudem die Zerkleinerungswirkung der Fräswalze unterstützen, wenn der Trockenkuchen oder der Bruch an den beabstandeten Stützelementen des Stützgitters bricht.

Besonders vorteilhaft ist ein vorderer Teil der Stütze als ein Stütztisch mit einer geschlossenen Stützfläche ausgebildet und ein hinterer Teil der Stütze als ein Stützgitter gebildet, das seitlich, über Zwischenräume beabstandete Stützelemente, insbesondere Stäbe, Barren Stangen oder dergleichen, aufweist. Diese bevorzugte Weiterbildung kombiniert die Vorteile eines zuvor erläuterten Stütztisches und eines zuvor erläuterten Stützgitters.

Vorteilhaft können in die Zwischenräume von beabstandeten Stützelementen eines Stützgitters Funktionselemente der Fräswalze eingreifen. Dies hat den Vorteil, dass die Funktionselemente der Fräswalze auf den Trockenkuchen oder Bruch schlagen, sodass dieser an den beabstandeten Stützelementen des Stützgitters bricht. Der Abstand der seitlich über Zwischenräume beabstandeten Stützelemente kann dementsprechend vorteilhaft eingestellt werden.

Eine Fräswalze kann, muss aber nicht, den einzigen Zerkleinerer einer Zerkleinerungsanordnung bilden. In einer Weiterbildung kann vorgesehen sein, dass die Zerkleinerungsanordnung, zusätzliche zur Fräswalze und einer optionalen Förderschnecke, ein weiteres Zerkleinerungs- und/oder Führungs-Element, insbesondere einen weiteren Zerkleinerer und/oder ein Umlenkmittel, aufweist.

Unter einem weiteren Zerkleinerer im Sinne der vorliegenden Anmeldung soll allgemein ein Mittel verstanden werden, das wenigstens eine rotierende Walze (Rotor) aufweist; d.h. eine rotierende Walze allein (Fräse, Schneidmühle) oder eine rotierende Walze, insbesondere Stachelwalze, in Kombination mit einem stehenden Teil (Brecher, insbesondere Kreuzflügelzerkleinerer), oder auch eine rotierende Walze in Kombination mit einer oder mehreren rotierenden Walzen (Mühle). Dies umfasst auch einen Zerkleinerer in Form einer Förderschnecke, die zwar primär einem Förderzweck dient, jedoch auch eine Zerkleinerungsfunktion wahrnehmen kann. Ein Zerkleinerer umfasst also wenigstens alle Arten von Fräsen, Brechern, Mühlen und Schnecken, nicht jedoch Gitter oder dergleichen Leitmittel, da letztere keine rotierende Walze aufweisen, die aktiv der Zerkleinerung von getrocknetem Polymergel des Trockenkuchens zu getrockneten Polymerpartikeln dient.

Vorzugsweise ist vorgesehen, dass die Zerkleinerungsanordnung eine Förderschnecke umfasst, wobei die Fräswalze Zerkleinerungsanordnung unmittelbar produktstromaufwärtig vor der Förderschnecke angeordnet ist und/oder die Förderschnecke als weiterer Zerkleinerer fungiert.

Vorzugsweise ist vorgesehen, dass die Förderschnecke neben oder unterhalb der Fräswalze angeordnet ist und/oder zur Aufnahme von frei fallenden getrockneten Polymerpartikeln aus der Fräswalze angeordnet ist.

Darüber hinaus nutzt die Weiterbildung den Vorteil, dass die Zerkleinerungsanordnung --vorzugsweise unmittelbar nach dem Polymeraustrag am Ende des Förderbandes und unmittelbar stromabwärtig vor der pneumatischen Förderung-- angeordnet ist. Auf diese Weise wird die Zerkleinerungsanordnung platzsparend zwischen dem Bandtrockner und der pneumatischen Förderung untergebracht. Dennoch kann diese unabhängig vom Bandtrockner betrieben werden, insbesondere weitgehend unabhängig von den Eigenschaften des vom getrockneten Trockenkuchen abgebrochenen groben Bruchs von getrockneten Polymerpartikeln.

Vorzugsweise ist vorgesehen, dass die Fräswalze ausgebildet ist, den Trockenkuchen zu getrockneten Polymerpartikeln zu zerkleinern, die eine vordefinierte Größenverteilung haben, um direkt von wenigstens einer, insbesondere mechanischen oder pneumatischen, Fördereinheit, insbesondere Förderschnecke, weiter befördert zu werden. Vorzugsweise ist die Zerkleinerungsanordnung, insbesondere die Fräswalze, zur Zerkleinerung des Trockenkuchens zu getrockneten Polymerpartikeln ausgebildet ist, wobei die zerkleinerten getrockneten Polymerpartikeln einen Massenmittel Teilchendurchmesser zwischen 0.5mm und 10mm, bevorzugt zwischen 1mm und 9mm, insbesondere zwischen 1 und 5mm aufweisen. Der Massenmittel Teilchendurchmesser nach Zerkleinerung wird nach EDANA Testmethode Nr. WSP 220.2-05 "Partikel Size Distribution" ermittelt.

Vorteilhaft ist die Zerkleinerungsanordnung für eine Verweilzeit von Polymerpartikeln unterhalb von 90sec. in der Zerkleinerungsanordnung ausgebildet. Die Verweilzeit der Polymerpartikel in der Fräswalze liegt jedoch deutlich darunter.

Vorzugsweise ist das Verfahren und der Bandtrockner mit der Zerkleinerungsanordnung und/oder Mahlung robust gegenüber Temperaturschwankungen. Die Zerkleinerungsanordnung ist insbesondere ausgebildet, die Polymerpartikel bei einer Temperatur zwischen 40°C und 140°C, insbesondere zwischen 60°C und 120°C, vorzugsweise zwischen 80°C und 120°C, zu zerkleinern. Dies hat Vorteile hinsichtlich der Zerkleinerung und Förderung der Polymerpartikel. Dadurch lassen sich die Zerkleinerungswirkung und Größenverteilung der zerkleinerten Polymerpartikel vorteilhaft beeinflussen.

Im Rahmen einer bevorzugten Weiterbildung ist die Fräswalze zum Rotieren der Welle mit einer Umdrehungsgeschwindigkeit von mehr als 50U/min und weniger als 250U/min ausgebildet. Dadurch lassen sich die Zerkleinerungswirkung und Größenverteilung der zerkleinerten Polymerpartikel vorteilhaft beeinflussen.

Vorteilhaft ist eine Anzahl von Funktionselemente der Fräswalze als eine Anzahl von Stäbe, Zähne, Barren, Schaufelflächen oder Zahn- , Zacken- oder Rändel-Stegen oder-Rändern, insbesondere Zahnspiralen oder Rändelschrauben, gebildet. Diese Funktionselemente haben sich als vorteilhaft erwiesen bei der Zerkleinerung des Trockenkuchens oder Bruchs desselben.

Vorteilhaft weist die Fräswalze eine Anzahl von Funktionselemente auf, die unter Bildung eines Arbeitsrandes entlang einem grundsätzlichen Verlauf einer Spirale angeordnet sind. Insbesondere weist die Spirale einen Gewindegang mit einem Gangwinkel zwischen 20° bis 70° auf. Dies führt zu einer bevorzugten Zerkleinerung und/oder bietet eine zeitlich vergleichmäßigte Belastungsverteilung für die Fräswalze, insbesondere für deren Antrieb, und/oder für die vorgenannte Stütze.

Vorteilhaft kann die Spirale einen einzigen Gewindegang haben oder die Spirale mehrere gleichgerichtete oder gegenläufige, insbesondere separate oder ineinandergreifende, Gewindegänge haben. Diese bietet die Möglichkeit, den Produktstrom von zerkleinerten getrockneten Polymerpartikeln quer zur Förderrichtung, insbesondere zur Mitte zu richten.

Vorteilhaft ist die Zerkleinerungsanordnung produktstromabwärtig vor einer pneumatischen Förderung und/oder Mahlung angeordnet.

Vorteilhaft ist vorgesehen, dass eine Mahlung zum Mahlen von zerkleinerten getrockneten Polymerpartikeln aus der Zerkleinerungsanordnung zu getrockneten, zerkleinerten und gemahlenen Polymerpartikeln ausgebildet ist, mit einem Massenmittel Teilchendurchmesser von mindestens 200 µm, besonders bevorzugt von 250 bis 500 µm, ganz besonders von 300 bis 700 µm. Der Massenmittel Teilchendurchmesser nach Mahlung und Siebung wird am Produktstrom nach EDANA Testmethode Nr. WSP 220.2-05 "Partikel Size Distribution" analog dem Massenmittel Teilchendurchmesser nach Zerkleinerung bestimmt.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee und dem Konzept der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee und das Konzept der Erfindung ist nicht beschränkt auf die exakte Form oder das Detail der im folgenden gezeigten und beschriebenen bevorzugten Ausführungsformen oder beschränkt auf einen Gegenstand, die beschränkt wäre im Vergleich zu dem in den Ansprüchen beanspruchten Gegenstand. Bei angegebenen Bemessungsbereichen sollen auch innerhalb der genannten Grenzen beliebige Werte als Grenzwerte offenbart und beliebig einsetzbar und beanspruchbar sein. Weitere Vorteile, Merkmale und Einzelheiten der Erfindung ergeben sich aus der nachfolgenden Beschreibung, der bevorzugten Ausführungsbeispiele sowie anhand der Zeichnung.

Im Einzelnen zeigt die Zeichnung in:

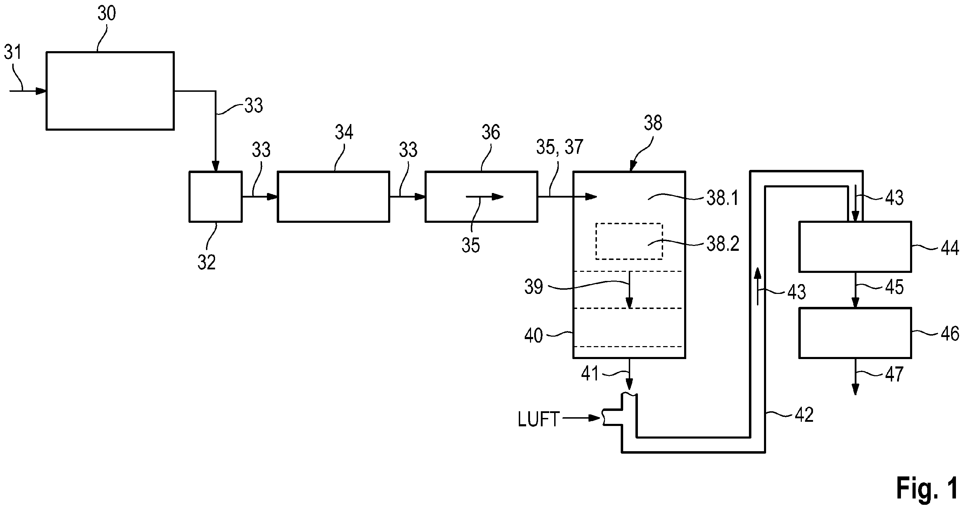

- FIG.1: eine schematische Darstellung einer Herstellungsanordnung zur Herstellung wasserabsorbierender Polymerpartikel mit einer bevorzugten Ausführungsform einer Bandtrockneranordnung mit einem Bandtrockner und in Produktstromrichtung nach dem Bandtrockner mit einer bevorzugten Zerkleinerungsanordnung zur Zerkleinerung eines Trockenkuchens von getrocknetem Polymergel zu getrockneten Polymerpartikeln, die zudem in Produktstromrichtung vor einer pneumatischen Förderung angeordnet ist;

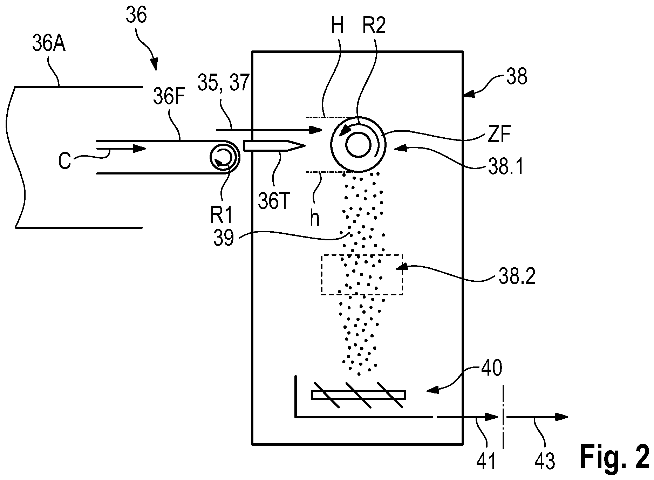

- FIG.2: die schematisch dargestellte bevorzugte Zerkleinerungsanordnung der Fig.1 in einer Ausführungsform mit einer Fräswalze und einer Förderschnecke; nämlich insgesamt zur Zerkleinerung eines Trockenkuchens von getrocknetem Polymergel zu getrockneten Polymerpartikeln produktstromabwärtig aus einem Bandtrockner und vor einer folgenden pneumatischen Förderung;

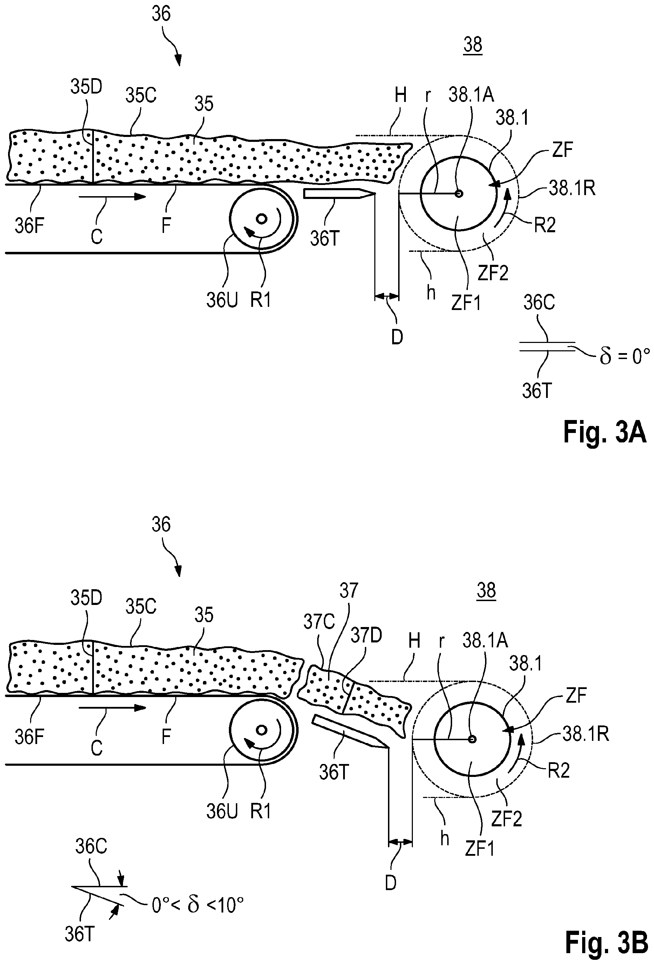

- FIG.3A: eine bevorzugte Anordnung einer rotierbaren Welle einer Fräswalze gemäß einer ersten Ausführungsform einer Bandtrockneranordnung mit einer Anzahl von Funktionselementen relativ zu einem Trockenkuchen, wobei der Trockenkuchen als Ganzes und im wesentlichen ungebrochen von einer horizontalen Stütze unterstützt ist und wobei die Fräswalze zum Abfräsen von getrockneten Polymerpartikeln direkt vom Trockenkuchen ausgebildet ist;
- Fig.3B: eine abgewandelte bevorzugte Anordnung einer rotierbaren Welle einer Fräswalze gemäß einer zweiten Ausführungsform einer Bandtrockneranordnung mit einer Anzahl von Funktionselementen relativ zu einem Trockenkuchen, wobei der Trockenkuchen als Ganzes und im wesentlichen ungebrochen oder teilweise an- oder abgebrochener Bruch von einer abgewinkelten Stütze unterstützt ist, so dass die Fräswalze zum Abfräsen von getrockneten Polymerpartikeln direkt vom Trockenkuchen oder direkt von einem hier beispielhaft dargestellten Bruch des Trockenkuchens ausgebildet ist;

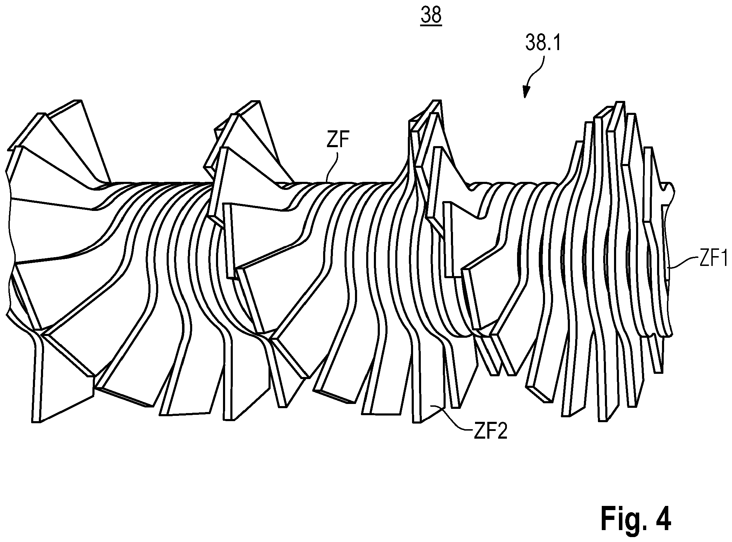

- FIG.4: ein Detail einer vorteilhaften rotierbaren Welle einer Fräswalze mit der Anzahl von Funktionselementen, hier in Form von Schlagbarren, die zum Abfräsen von getrockneten Polymerpartikeln vom Trockenkuchen oder einem Bruch desselben ausgebildet sind,

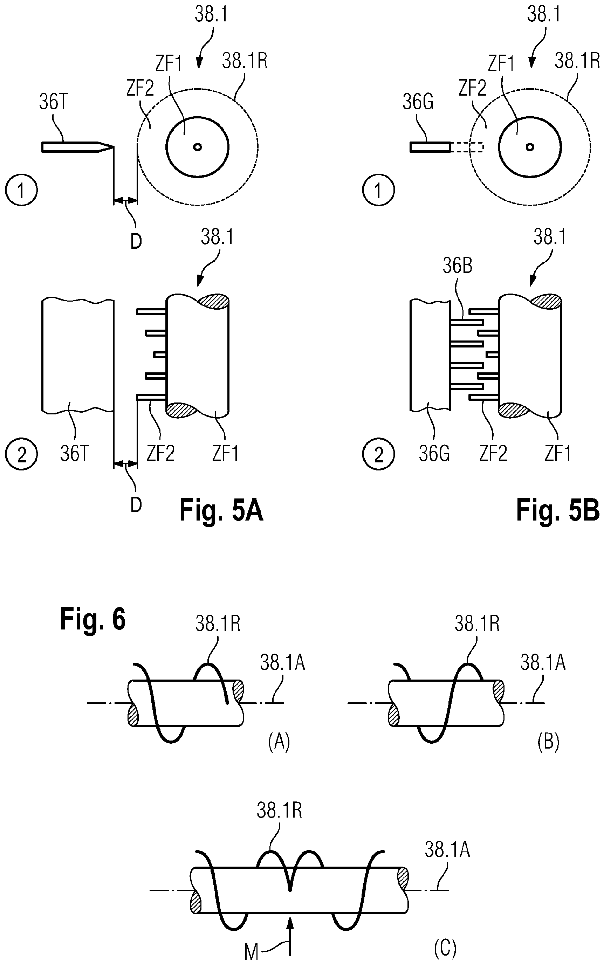

- Fig.5A: eine bevorzugte Stütze in Form eines geschlossenen flächigen Stütztisches in Verlängerung des Förderbandes, bei dem ein Abstand zwischen dessen Kante und einem Arbeitsrand der Fräswalze belassen ist gemäß einer bevorzugten Ausführungsform einer Bandtrockneranordnung;
- Fig.5B: eine andere bevorzugte Stütze in Form eines, mindestens teilweise, im Wesentlichen auf der der Fräswalze zugewandten Seite, offenen Stützgitters mit über Zwischenräume beabstandeten Stäben oder Barren oder dergleichen festen Stützelementen gemäß einer bevorzugten Ausführungsform einer Bandtrockneranordnung; in diese Zwischenräume greifen Funktionselemente der Fräswalze ein, es ist also das Stützgitter in Überlappung mit dem Arbeitsrand der Fräswalze angeordnet;
- Fig.6: in Ansichten A, B und C drei unterschiedliche spiralförmig verlaufende grundsätzliche Verläufe von Arbeitsrändern einer Fräswalze bei einer bevorzugten Zerkleinerungsanordnung;

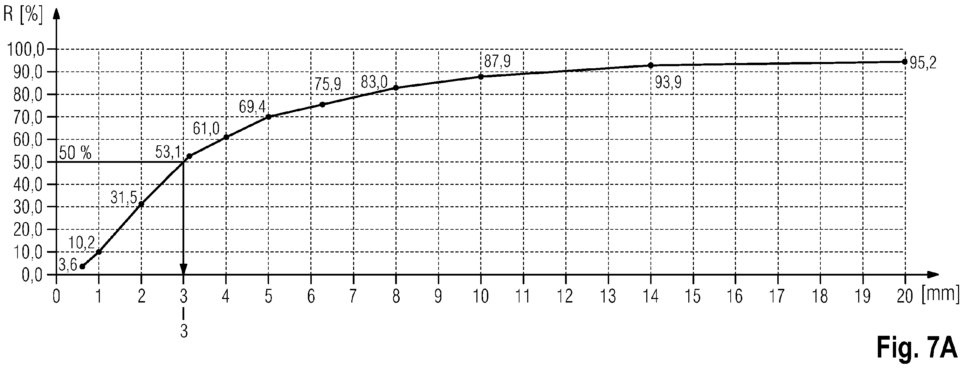

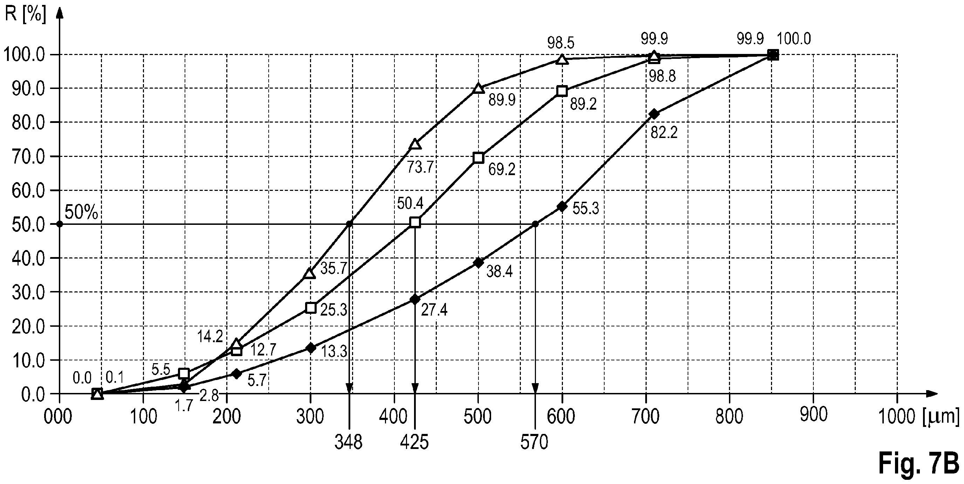

- FIG.7A, FIG.7B: eine kumulierte Auftragung von Massenanteilen der Siebfraktionen zur graphischen Bestimmung des Massenmittel Teilchendurchmessers nach Zerkleinerung (Fig.7A) und Mahlung (Fig.7B), insbesondere zur Erläuterung eines analogen Vorgehens zur Bestimmung der Massenmittel Teilchendurchmesser nach Mahlung anhand von drei Beispielen bei einer bevorzugten Ausführungsform des Herstellungsverfahrens.

In der Zeichnung sind für gleiche oder ähnliche Teile oder Teile gleicher oder ähnlicher Funktion der Einfachheit halber gleiche Bezugszeichen benutzt.

Ein Herstellungsverfahren weist beispielsweise die Schritte auf:
- Prozessieren einer Monomer-Lösung oder -Suspension unter Polymerisation zu einem wässrigen Polymergel,
- Trocknen des wässrigen Polymergels in einem Bandtrockner, wobei der Bandtrockner ein zirkulierendes Transportband hat und das wässrige Polymergel auf dem Transportband gefördert wird.
   Bevorzugt ist dabei, dass
- das Transportband als ein Plattentransportband gebildet ist, aufweisend eine Anzahl von Bandplatten die an einer Gelenklinie einer Gelenkkonstruktion getrennt sind und wobei jede Bandplatte eine Oberfläche zur Aufnahme des wässrigen Polymergels hat.

Insbesondere kann dieses Herstellungsverfahren umfassen: Prozessieren einer Monomer-Lösung oder -Suspension unter Polymerisation zu einem vernetzten wässrigen Polymergel.

Im Rahmen einer besonders bevorzugten Weiterbildung wurde erkannt, dass das Konzept der Erfindung oder einer seiner Weiterbildungen von besonderem Vorteil ist für einen speziellen Herstellungsprozess für Superabsorber, insbesondere für einen speziellen Herstellungsprozess für ein Polymergel für Superabsorber, der im folgenden mit einigen Weiterbildungen beschrieben wird und zum Teil auch in WO2011/104152 und WO2006/100300 A1 näher erläutert ist, deren Offenbarungsgehalt hiermit durch Zitat in den Offenbarungsgehalt der vorliegenden Anmeldung aufgenommen ist.

Insbesondere betrifft dies ein Herstellungsverfahren zur Herstellung wasserabsorbierender Polymerpartikel mit Polymerisation einer Monomer-Lösung oder-Suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
   optional ein oder mehrere wasserlösliche Polymere.

Die wasserabsorbierenden Polymerpartikel werden mit Polymerisation einer Monomer-Lösung oder-Suspension hergestellt und sind wasserunlöslich.

Das wässrige Polymergel wird dann mit einem Bandtrockner getrocknet bis sich ein gewünschter, bevorzugt niedriger Wassergehalt einstellt, insofern insbesondere ein Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchte-gehalt gemäß der von der EDANA empfohlenen Testmethode Nr. WSP 230.2-05 "Mass Loss Upon Heating" bestimmt wird. Bei einer zu hohen Restfeuchte weist das getrocknete Polymergel eine zu niedrige Glasübergangstemperatur Tg auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung ein- oder mehrstufige Walzenstühle, bevorzugt zwei- oder dreistufige Walzenstühle, Stiftmühlen, Hammermühlen oder Schwingmühlen, eingesetzt werden können.

FIG.1 zeigt eine schematische Darstellung eines Herstellungsprozesses für Poly(meth)acrylate; d.h. allgemein SAP. Der schematischen Darstellung in FIG.1 kann der Ablauf eines Herstellungsverfahrens für Poly(meth)acrylate bis zu getrockneten Polymerpartikeln entnommen werden.

Die Edukte 31 zur Herstellung der Poly(meth)acrylate werden beispielsweise in einen Mischkneter, Bandreaktor oder sonstigen Reaktor 30 eingegeben. Der Mischkneter umfasst beispielsweise zwei achsparallele, rotierenden Wellen, auf deren Oberflächen-Scheibenflächen mit an ihrem Umfang angeordneten Knetbarren aufgenommen sind. In einer Polymerisierungsreaktion wird als Produkt Poly(meth)acrylat erzeugt, welches den Reaktor 30 in Form von Klumpen 33 mit gelartiger Konsistenz verlässt. Die Klumpen 33 gelangen in einen Gelbunker 32, von dem aus die Klumpen mit einem Schwenkband oder dergleichen Fördermittel 34 auf ein in Fig.2 dargestelltes Förderband 36F eines Bandtrockners 36 aufgetragen werden, d.h. die Klumpen 33 als superabsorbierendes Polymer im Zustand eines wässrigen Polymergels von noch wässrigen Polymergelpartikeln. Durch den Bandtrockner 36 wird den wässrigen Polymergelpartikeln auf dem Förderband 36F bei einer Temperatur von bis zu 200°C Flüssigkeit entzogen, sodass diese als teilgetrocknete, d.h. noch feuchte Polymergelpartikel, auf dem Förderband durch den Bandtrockner gefördert werden. Die getrockneten Poly(meth)acrylatBrocken gelangen als getrocknete Polymergelpartikel eines brettartigen festen Trockenkuchens 35 an den Ausgang des Bandtrockners. Der Trockenkuchen 35 gelangt anschließend in eine Zerkleinerungsanordnung 38.

Der Trockenkuchen 35 kann am Ende des Förderbandes ungebrochen in die Zerkleinerungsanordnung 38 gelangen (wie in Fig.3A zu sehen) oder er kann gebrochen oder angebrochen als Bruch 37 vorliegen (wie in Fig.3B zu sehen); dann gelangt der Bruch 37, also grobe Bruchstücke oder Brocken, anschließend in die Zerkleinerungsanordnung 38.

Soweit der Trockenkuchen 35 ohne zu brechen, d.h. im Ganzen, bereits gemäß einer ersten abgewandelten Ausführungsform (Fig.3A) an eine Fräse einer Zerkleinerungsanordnung 38 gelangt, werden zerkleinerte Polymerpartikel direkt vom Trockenkuchen 35 abgefräst. Es kann aber grundsätzlich auch gemäß einer zweiten abgewandelten Ausführungsform (Fig.3B) ein Bruch 37 des Trockenkuchens 35 oder sonstige grobe Brocken von der Fräse zu zerkleinerten Polymerpartikeln zerfräst werden.

Als Teil einer Zerkleinerungsanordnung gemäß dem Stand der Technik ist beispielsweise gemäß WO2013/072419 nur ein als Kreuzflügelzerkleinerer ausgeführter Zerkleinerer vorgesehen. Ein Kreuzflügelzerkleinerer gemäß dem Stand der Technik umfasst beispielsweise eine Welle, an der eine Vielzahl von Funktionsstäben aufgenommen sind. Die Funktionsstäbe sind mit der Welle 10 verschweißt. Neben den auf der Welle angeordneten Funktionsstäben, umfasst ein Kreuzflügelzerkleinerer eine Vielzahl fest montierter Barren die in Zwischenräume der auf der Welle angeordneten Funktionsstäbe 14 eingreifen. Die in den Zerkleinerer eingegebenen Poly(meth)acrylat-Brocken aus getrockneten Polymerpartikeln des Trockenkuchens fallen üblicherweise vom Förderband auf die fest montierten Barren und bleiben auf diesen liegen. Durch die sich mit der Welle mitdrehenden Funktionsstäbe werden die Brocken zerschlagen. Nach dem Passieren des Kreuzflügelzerkleinerers werden die grob zerkleinerten getrockneten Polymerpartikeln über ein pneumatisches Transportsystem z.B. einer Mahlung oder dergleichen mit einer Mühle zugeführt. Dort werden die Poly(meth)acrylat-Partikel weiter zermahlen bis das Produkt in Form eines Pulvers entsteht.

Problematisch bei dieser zwar vergleichsweise einfach und effizient ausgelegten Anlagenform des Standes der Technik mit lediglich einem Kreuzflügelzerkleinerer ist jedoch, dass es an einer ausreichend feinen Zerkleinerung von Bruchstücken mittels dem lediglich einem Kreuzflügelzerkleinerer mangeln kann. Es ist nämlich abhängig von dem zu trocknenden Produkt (Feststoffgehalt Monomer Lösung, Neutralisationsgrad, Vernetzungsgrad, etc.), den Trocknungsbedingungen und dem Durchsatz des Bandtrockners durchaus von ggf. unterschiedlicher Härte des Trockenkuchens 35 auszugehen. So kann je nach Dimensionierung ein allein vorgesehener Kreuzflügelzerkleinerer ggf. nicht ausreichend sein, fein zerkleinerte Bruchstücke zur Verfügung zu stellen. Diese könnten beispielsweise durch einen zu groß dimensionierten Abstandsbereich zwischen den Barren des Kreuzflügelzerkleinerers fallen oder sie könnten einfach auf diesem liegenbleiben. Beide Fälle erweisen sich als unvorteilhaft für den Betrieb der Anlage. Insbesondere für den Fall, dass zu grobe Brocken in das pneumatische Transportsystem gelangen, könnte dies zu Transportproblemen führen. Insbesondere könnten zu grobe Brocken von der im weiteren Förderbereich vorgesehenen Mühle nur unvorteilhaft verarbeitet werden oder gar nicht eingezogen werden.

Im vorliegenden Fall hat die Erfindung erkannt, dass sich eine in Fig.2 ff als bevorzugte Ausführungsform gezeigte Fräswalze 38.1 in mehrerer Hinsicht bewährt hat. Die Fräswalze 38.1 arbeitet direkt am Trockenkuchen 35 (Fig.3A) gemäß einer ersten Abwandlung oder direkt am Bruch 37 des Trockenkuchens 35 gemäß einer zweiten Abwandlung (Fig.3B) - d.h. die Fräswalze 38.1 fräst direkt an einem mehr oder weniger horizontal vom Förderband 36F des Bandtrockners 36 übernommenen ungebrochenen getrockneten Polymerstrang, d.h. eines Trockenkuchens 35, oder eines gebrochenen Polymerstrangs, d.h. eines Bruchs 37 des Trockenkuchens 35.

Es ist deshalb für die Zerkleinerungsanordnung 38 der FIG.1 ein Zerkleinerer vorgesehen, der als eine Fräswalze 38.1 ausgebildet ist, d.h. die Fräswalze 38.1 zerfräst den Trockenkuchen 35 oder den Bruch 37 des Trockenkuchens, der vom Förderband 36F des Bandtrockners 36 direkt mehr oder weniger horizontal gegen die Fräswalze geschoben wird, zu zerkleinerten getrockneten Polymerpartikeln 39.

Optional ist die Fräswalze 38.1 in Kombination mit einem weiteren Zerkleinerungs- und/oder Führungs-Element 38.2 der Zerkleinerungsvorrichtung 38 kombiniert, das der

Fräswalze 38.1 nachgeordnet ist. Das weitere Zerkleinerungs- und/oder Führungs-Element 38.2 der Zerkleinerungsvorrichtung 38 kann ein weiterer Zerkleinerer sein. Das weitere Zerkleinerungs- und/oder Führungs-Element 38.2 der Zerkleinerungsvorrichtung 38 kann auch ein Umlenkmittel, wie ein Trichter oder dergleichen sein.

Die Fräswalze 38.1 ist gemäß dem Konzept der Erfindung vereinfacht ausgedrückt auf Höhe oder oberhalb der Höhe einer Aufnahmefläche eines Förderbandes zur fräsenden Bearbeitung des Trockenkuchens und Abwurf von abgefrästen getrockneten Polymerpartikel des Trockenkuchens nach unten angeordnet.

Konkret ist dazu vorgesehen, dass --wie in Fig.2 ff ersichtlich-- eine obere Arbeitslinie H eines Arbeitsrandes 38.1R der Fräswalze 38.1 auf oder oberhalb einer Aufnahmefläche F eines Förderbandes 36F zur fräsenden Bearbeitung des Trockenkuchens 35 oder des Bruchs 37 desselben angeordnet ist, wobei die Fräswalze 38.1 zum Abwurf von zerkleinerten getrockneten Polymerpartikeln 39 des Trockenkuchens 35 nach unten ausgebildet ist.

Der Abwurf von zerkleinerten getrockneten Polymerpartikeln 39 des Trockenkuchens 35 nach unten folgt der Schwerkraft und wird vorzugsweise durch die Drehrichtung der Fräswalze 38.1 unterstützt. Unter einer Arbeitslinie H des Arbeitsrandes 38.1R der Fräswalze 38.1 ist die Tangente am oberen Scheitelpunkt am Arbeitsrand 38.1R der Fräswalze 38.1 zu verstehen. Entsprechend ist unter einer unteren Arbeitslinie h der Fräswalze eine Tangente am unteren Scheitelpunkt des Arbeitsrandes 38.1R der Fräswalze 38.1 zu verstehen. Der Arbeitsrand 38.1R ist zu verstehen als der Kreis, dessen Radius durch das Ende der Funktionselemente ZF2 der Fräswalze vorgegeben ist; also vor allem derjenige äußere Rand der Fräswalze 38.1, der am Trockenkuchen 35 oder Bruch 37 desselben arbeitet.

Es ist dadurch sichergestellt, dass die zerkleinerten Polymerpartikel aus der Fräswalze ausreichend fein zerkleinert werden, um für das pneumatische Transportsystem förderbar und vorzugsweise von einer Mühle gut mahlbar zu sein. Die Details einer Zerkleinerungsanordnung 38 der FIG.1 werden in Bezug auf die weiteren FIG.2 bis FIG.6 erläutert.

Weiter Bezug nehmend auf Fig.1, weist die Zerkleinerungsanordnung 38 zur Fräswalze 38.1 und dem optionalen weiteren Zerkleinerungs- und/oder Führungs-Element 38.2 optional auch eine Förderschnecke 40 auf, die in Fig. 2 gezeigt und weiter erläutert ist. Die Fräswalze 38.1 der Zerkleinerungsanordnung 38 ist für den Fall, dass ein optionales weiteres Zerkleinerungs- und/oder Führungs-Element 38.2 nicht vorgesehen ist unmittelbar produktstromaufwärtig vor der Förderschnecke 40 angeordnet. Die Förderschnecke 40 ist in Fig.1 in Produktstromrichtung unmittelbar nach der Fräswalze 38.1 bzw. einem optionalen weiteren Zerkleinerungs- und/oder Führungs-Element 38.2 angeordnet. Die Fräswalze 38.1 der Zerkleinerungsanordnung 38 ist --für den Fall, dass ein optionales weiteres Zerkleinerungs- und/oder Führungs-Element 38.2 vorgesehen ist-- also unmittelbar produktstromaufwärtig vor dem weiteren Zerkleinerungs- und/oder Führungs-Element 38.2 und mittelbar vor der Förderschnecke 40 angeordnet.

Vorliegend werden getrocknete Polymerpartikel (genauer Poly(meth)acrylat Partikel) d.h. ausreichend für die pneumatische Förderung und für einen Mahlvorgang zerkleinerte Polymerpartikel, die hier zusammen mit dem Bezugszeichen 39 versehen sind, der Förderschnecke 40 zugeführt. Die Förderschnecke 40 sieht bevorzugt eine Vergleichmäßigung des Hauptstroms eines Gutprodukts vor.

Die insofern gut zerkleinerten und vergleichmäßigten getrockneten Polymerpartikel des Hauptstroms 41 werden dann einer pneumatischen Förderung 42 zugeführt, und diese ausreichend zerkleinerten Polymerpartikel im vergleichmäßigten Produktstrom der pneumatischen Förderung werden mit dem Bezugszeichen 43 bezeichnet. Diese getrockneten Polymerpartikel 43 werden dann einer Mahlung 44 mit einer Mühle für einen Mahlvorgang zugeführt und dort gemahlen und gelangen als gemahlene, getrocknete Polymerpartikel 45 in eine Siebvorrichtung 46. Nach der Siebvorrichtung 46 verlassen die gesiebten, gemahlenen, und getrockneten Polymerpartikel 47 mit einer gewünschten Partikelgrößenverteilung der Gutfraktion die Siebvorrichtung, und diese gesiebten, gemahlenen, getrockneten Polymerpartikel 47 werden ggf. einer weiteren Behandlung, etwa einer Oberflächennachvernetzung sowie einem anschließenden Trocknungsvorgang oder sonstigem thermischen Behandlungsvorgang zugeführt und nach einer Schutzsiebung als Produkt zur Verfügung gestellt. Etwaige Fraktionen mit Überkorn nach der Siebvorrichtung 46 können nochmals einer Mahlung 44 in der Mühle zugeführt werden, bis sie eine gewünschte Partikelgrößenverteilung der Gutfraktion aufweisen.

Die mittlere Partikelgröße der als gemahlene Polymerpartikel abgetrennten superabsorbierenden Polymerpartikel beträgt vorzugsweise mindestens 200 µm, besonders bevorzugt von 250 bis 600 µm, ganz besonders von 300 bis 500 µm. Die mittlere Partikelgröße der Polymerpartikel kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Polymerpartikeln mit einer Partikelgröße von größer 150 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (entspricht einem SFC-Wert als Maß für die Permeabilität von Flüssigkeit zwischen Polymerpartikeln; Messmethode z.B. EP 0 752 892 B1 S.33-36 [0224]-[0251]. Daher sollte der Anteil zu kleiner Polymerpartikel ("fines") niedrig sein.

Zu kleine Polymerpartikel werden daher abgetrennt und in das Herstellungsverfahren rückgeführt. Die Rückführung erfolgt vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Herstellungsverfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise im letzten Drittel des Knetreaktors zugesetzt.

Werden die zu kleinen Polymerpartikel sehr früh zugesetzt, beispielsweise bereits zur Monomer-Lösung, so wird dadurch die Zentrifugenretentionskapazität (CRC) der erhaltenen wasserabsorbierenden Polymerpartikel gesenkt. Dies kann zwar beispielsweise durch Anpassung der Einsatzmenge an Vernetzer b) kompensiert werden. Die zu kleinen Polymerpartikel können auch später zugesetzt werden, könnten dann aber ggfs. nur unzureichend eingearbeitet werden.

Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm, beträgt vorzugsweise mindestens 90 Gew.-%, besonders bevorzugt mindesten 95 Gew.-%, ganz besonders bevorzugt mindestens 98 Gew.-%. Der Anteil an Partikeln mit einer Partikelgröße von höchstens 600 µm, beträgt vorzugsweise mindestens 90 Gew.-%, besonders bevorzugt mindesten 95 Gew.-%, ganz besonders bevorzugt mindestens 98 Gew.-%. Polymerpartikel mit zu großer Partikelgröße senken die Anquellgeschwindigkeit. Daher sollte der Anteil zu großer Polymerpartikel ebenfalls niedrig sein. Zu große Polymerpartikel werden daher abgetrennt und in die Mahlung des getrockneten Polymergels rückgeführt.

Gemäß dem Konzept der Erfindung werden zur oben beschriebenen Fig.1 im folgenden anhand von Fig.2 ff. bevorzugte Zerkleinerungsanordnungen 38 beschrieben, welche den getrockneten Polymerstrang aus Polymergel, d.h. denn Trockenkuchen 35 oder Bruchstücke 37 des Trockenkuchens 35 nach der Trocknung bzw. nach einem Bandtrockner 36 in verbesserter Weise zu getrockneten Polymerpartikeln 39 zerkleinern - jedenfalls mit einem Massenmittel Teilchendurchmessern deutlich oberhalb 0.5mm. Insbesondere sollen die getrockneten Polymerpartikel im Rahmen des verbesserten Zerkleinerungsverfahrens für das getrocknete Polymergel des Trockenkuchens 35 oder Bruchstücke 37 des Trockenkuchens 35 mit einer für eine anschließende pneumatische Förderung und/oder Mahlung geeigneten bzw. bestimmten Partikelgröße zerkleinert werden.

Dazu zeigt Fig.2 eine Zerkleinerungsanordnung 38 mit einem ersten Zerkleinerer in Form einer Fräswalze 38.1, die auch als Zerkleinerungsfräse ZF bezeichnet ist. Die Zerkleinerungsanordnung 38 weist auch eine Förderschnecke 40 auf. Die Förderschnecke 40 ist in Fig. 2 der Einfachheit halber um 90° gedreht gezeigt. Sie ist aber realistisch mit ihrer Achse parallel zur Achse der Fräswalze 38.1 ausgerichtet (also in Wirklichkeit um 90° gedreht im Vergleich zu Fig. 2). Damit ist die Förderschnecke 40 ausgebildet, die Polymerpartikel 39 seitlich, also entlang der Achse, zu transportieren und/oder (je nach Ausbildung der Spirale der Förderschnecke 40) zusammen zu ziehen; d. h. bevorzugt zur Mitte dieser Achse hin zu transportieren. Die Förderschnecke 40 dient hier vorteilhaft auch zur Vergleichmäßigung der bereits zerkleinerten und getrockneten Polymerpartikel 39. Zusätzlich kann diese vorteilhaft zur weiteren Zerkleinerung der getrockneten Polymerpartikel 39 ausgelegt sein. Insofern kann die Förderschnecke 40 auch als weiterer Zerkleinerer von bereits zerkleinerten Polymerpartikeln und Erzeugung eines vergleichmäßigten Stroms 41 derselben dienen. Diese zerkleinerten und ausreichend vergleichmäßigten getrockneten Polymerpartikel 41 gelangen dann als Produktstrom 43 in die pneumatische Förderung 42.

Vorteilhaft bei dieser Anordnung ist, dass die Fräswalze 38.1 den Trockenkuchen 35,das heißt der direkt, praktisch horizontal, in die Fräswalze 38.1 gelangende ungebrochene Trockenkuchen 35 (Fig.3A) oder der mehr oder weniger horizontal direkt in die Fräswalze 38.1 gelangende Bruch 37 vom Trockenkuchen 35 (Fig.3B)-- zu getrockneten Polymerpartikeln 39 zu zerkleinern, die eine vordefinierte Größenverteilung haben, um direkt von der pneumatischen Förderung 42 befördert werden zu können.

Die in Fig.2 gezeigte Förderschnecke 40 ist insofern optional. Sie kann auch ausschließlich zum Transport und Vergleichmäßigung der Polymerpartikel 39 vorgesehen werden. Vorteilhaft kann sie jedoch auch als zweiter Zerkleinerer für die Polymerpartikel 39 fungieren. Die Polymerpartikel 41 und auch die vergleichmäßigten Polymerpartikel haben vorliegend eine
einen Massenmittel Teilchendurchmesser zwischen 0.5mm und 10mm, bevorzugt zwischen 1mm und 9mm, insbesondere zwischen 1 und 5mm.

Die gesamte Zerkleinerungsanordnung 38 arbeitet bevorzugt bei einer Temperatur oberhalb etwa 40° C bis maximal 140°C, bevorzugt 60-120°C, besonders bevorzugt 80-120°C - dies stellt in besonderer Weise vergleichsweise konstante Härtegrade des Trockenkuchens 35 im Bereich der Zerkleinerungsanordnung 38 sicher und verhindert Kondensation von Feuchte und Anbackungen.

Die relative Anordnung der Fräswalze 38.1 in Bezug auf den Trockenkuchen 35 im Trockneraufbau 36 (Fig.3A) beziehungsweise den Bruch 37 desselben (Fig.3B) wird nun näher in Fig.3A bzw. Fig.3B gezeigt, wobei dazu das Förderband 36F des Aufbaus 36 mit dem Trockenkuchen 35 dargestellt ist. Beispielsweise ist eine Fräswalze 38.1 in Fig. 4 gezeigt.

Der Trockenkuchen 35 kann ungebrochen über eine Stütze geführt, die hier in einer Variante als Stütztisch 36T gezeigt ist, von der Fräswalze bearbeitet werden gemäß Fig.3A. Es kann jedoch auch gemäß Fig.3B am Ende des Förderbandes 36F der Trockenkuchen 35 brechen. Dann wird der Bruch 37 von getrockneten Polymerpartikeln des Trockenkuchens 35 über eine Stütze , die hier in einer Variante als Stütztisch 36T gezeigt ist, in Richtung der Fräswalze 38.1 rutschen bzw. geschoben, die hier als maßgeblicher Zerkleinerer vorgesehen ist. Es hat sich gezeigt, dass es vorteilhaft ist, die Fräswalze 38.1 zum Abfräsen von getrockneten Polymerpartikeln direkt am Trockenkuchen zu platzieren, beziehungsweise den Trockenkuchen oder ggf. den Bruch 37 desselben direkt auf die Fräswalze 38.1 zu leiten.

Die als Zerkleinerungsfräse ZF ausgebildete Fräswalze 38.1 weist dazu eine rotierbare Welle ZF1 mit einer Anzahl von Funktionselementen ZF2 auf, welche zum Abfräsen von getrockneten Polymerpartikeln direkt vom Trockenkuchen 35 bzw. dem Bruch oder Brocken 37 desselben ausgebildet sind. Der Arbeitsrand 38.1R der Fräswalze 38.1 ist zu verstehen als derjenige äußere Rand der Fräswalze, der am Trockenkuchen arbeitet; also insbesondere. der Umfangskreis, dessen Radius durch das Ende von Funktionselementen der Fräswalze vorgegeben ist.

Weiter Bezug nehmend auf Fig.3A und Fig.3B ist bei der hier dargestellten Ausführungsform vorgesehen, dass die Fräswalze 38.1 in einem Abstand D von 0,5 bis 5 cm vom Ende der Stütze angeordnet ist.

Eine Stütze für den Trockenkuchen 35 oder den Bruch 37 desselben ist zwischen dem Förderband 36F und der Fräswalze 38.1 in Verlängerung der Aufnahmefläche F angeordnet und praktisch parallel zum Förderband 36F bzw. zur Transportrichtung C ausgerichtet oder aber in einem Winkel δ zur Horizontalen bzw. zur Transportrichtung C, d.h. bevorzugt nach unten alternativ aber ggfs. auch nach oben geneigt.

Bei der Ausführungsform der Fig.3A ist der Winkel δ nahezu oder im Bereich von 0°; d.h. die Stütze in Form eines Stütztisches 36T ist praktisch parallel zum Förderband 36F bzw. zur Transportrichtung C ausgerichtet.

Bei der Ausführungsform der Fig.3B ist der Winkel δ zur Horizontalen bzw. zur Transportrichtung C nach unten etwas größer als 0°, d.h. der Stütztisch 36T ist leicht geneigt, nämlich vorliegend mit einem Winkel δ von 1° bis 5° nach unten. Ggfs. kann in einer abgewandelten Ausführungsform der Winkel δ aber bis zu 10° oder ggfs. bis zu 15° betragen.

In einer variierten Ausführungsform, die hier nicht gezeigt ist, kann ein Winkel δ' zur Horizontalen bzw. zur Transportrichtung C alternativ auch nach oben gerichtet sein. So kann z.B. der Stütztisches 36T praktisch parallel zum Förderband 36F oder alternativ leicht nach oben geneigt sein, sodass der Trockenkuchen 35 oder Bruchstücke 37 des Trockenkuchens, aufgrund der Neigung des Stütztisches 36T nach oben, leicht nach oben angestellt werden. Ein solcher Winkel δ' nach oben relativ zur Horizontalen bzw. zur Transportrichtung C kann beispielsweise ein Winkel δ' von 1° bis 5° oder ggfs. bis 10°oder ggfs. bis 15° sein. Grundsätzlich sind Winkel δ, δ' nach unten oder oben theoretisch jedenfalls bis zu 30° denkbar.

Um eine möglichst gleichmäßige und hinreichende Zerkleinerung des Trockenkuchens 35 oder des Bruchs 37 zu getrockneten Polymerpartikeln zu erreichen, ist die relative Höhe der Fräswalze 38.1 in Bezug auf das Förderband 36F eingestellt. D.h. die obere Arbeitslinie H der Fräswalze 38.1 liegt zur fräsenden Bearbeitung des Trockenkuchens 35 beziehungsweise des Bruchs 37 mindestens auf Höhe oder leicht oberhalb der Aufnahmefläche des Förderbandes 36F, wie in Fig.3A und Fig.3B erkennbar. Damit ist die Fräswalze bereits zum Abwurf von abgefrästen getrockneten Polymerpartikeln 39 des Trockenkuchens nach unten angeordnet. Zudem weist die Fräswalze 38.1 eine rotierbare Welle ZF1 mit Funktionselementen ZF2 auf und das Förderband 36F eine Umlenkrolle 36U, wobei die rotierbare Welle ZF1 zum Rotieren mit einer Drehrichtung R2 gegen eine Drehrichtung R1 der Umlenkrolle 36U ausgebildet ist. Auch dies unterstützt den Abwurf von abgefrästen getrockneten Polymerpartikeln 39 des Trockenkuchens nach unten.

Die relative Ausrichtung von Fräswalze 38.1 zum Trockenkuchen 35 und Bruch 37 ist in der vorbeschriebenen Weise durch die Arbeitslinie H kenntlich gemacht. Vorliegend ist die Arbeitslinie H des Arbeitsrandes 38.1R der Fräswalze 38.1 auf Höhe oder oberhalb der Aufnahmefläche F des Förderbandes 36F angebracht. Dies ist ersichtlich aus der Nivellierung der Arbeitslinie H relativ zur Aufnahmefläche F des Förderbandes 36F. Gemäß Fig.3A und 3B bei einem ungebrochenen Trockenkuchen 35 liegt besonders bevorzugt die obere Arbeitslinie H der Fräswalze 38.1 oberhalb einer Oberkante 35C des Trockenkuchens beziehungsweise relativ zur Oberkante 35C des Trockenkuchens 35 bzw. der Oberkante 37C des Bruchs 37.

Andererseits ist dem Konzept der Erfindung folgend vorliegend sichergestellt, dass die Fräswalze 38.1 einen ausreichend großen Durchmesser aufweist. Dazu ist sichergestellt, dass die Achse 38.1A der Fräswalze 38.1 auf Höhe oder unterhalb der Höhe der Aufnahmefläche F des Förderbandes 36F angebracht ist. Konkret ist vorliegend sichergestellt, dass ein Radius r der Fräswalze 38.1 größer oder gleich der Dicke 35D, 37D des Trockenkuchens 35 oder des Bruchs 37) ist und eine untere Arbeitslinie der Fräswalze 38.1 unterhalb einer Aufnahmefläche F eines Förderbandes 36F liegt.

Im Rahmen dieser relativen Ausrichtung der Fräswalze 38.1 zum Trockenkuchen 35 oder Bruch 37 und bei den gewählten Parametern der vorgenannten Umdrehungsgeschwindigkeit und Temperaturbedingungen beim Zerkleinerer 38 ergibt sich bereits ein überraschend gleichmäßiger und gut zerkleinerter Abwurf von zerkleinerten Polymerpartikeln 39. Dazu wird weiter in Bezug auf Fig.7A und Fig.7B eingegangen.

Fig.4 zeigt eine besonders bevorzugte Ausführungsform einer solchen Fräswalze 38.1 in Form einer Zerkleinerungsfräse ZF mit den genannten Funktionselementen ZF2 in Form von Schlagbarren, die einen Arbeitsrand 38.1R zum Fräsen des Bruchs 37 beziehungsweise Trockenkuchens 35 bilden. Der Arbeitsrand 38.1R ist erkennbar dem Verlauf einer Spirale folgend ausgebildet; hier eine Spirale mit einem gewindeartigen Verlauf, wobei das Gewinde einen Gangwinkel zwischen 40° bis 50° bildet.

Die Fräswalze rotiert zum Erreichen der vorbestimmten Partikelgröße mit einer Drehzahl von mehr als 50 Umdrehungen pro Minute und weniger als 250 Umdrehungen pro Minute, bevorzugt im Bereich von 100 Umdrehungen pro Minute. abhängig vom tatsächlichen Durchmesser des Arbeitsrandes 38.1R der Fräswalze. Grundsätzlich hat es sich als vorteilhaft erwiesen, dass die Fräswalze rotiert zum Erreichen der vorbestimmten Partikelgröße mit einer Drehzahl, die in der Tendenz umso höher ist je geringer der Durchmesser des Arbeitsrandes 38.1R der Fräswalze ist. Vorliegend gilt dies vorzugsweise bei einer Umgebungstemperatur von 40°-140°C Celsius, bevorzugt 60-120°C, besonders bevorzugt 80-120°C im Bereich der Zerkleinerungsanordnung 38.

Fig.5A und 5B zeigt jeweils in einer Seitenansicht "1" und in einer Draufsicht "2" die relative Anordnung einer in Bezug auf Fig.3A und Fig.3B beispielhaft erläuterten Stütze; nämlich einmal einen Stütztisch 36T und einmal ein Stützgitter 36G zur unterstützenden Führung des Trockenkuchens 35 oder --für den Fall, dass dieser abbrechen sollte-- des Bruchs 37 des Trockenkuchens 35 direkt zur Fräswalze 38.1. Dazu ist in Fig.5A und Fig.5B jeweils die Fräswalze 38.1 mit entsprechenden Funktionselementen ZF2 an einer Welle ZF1 und mit dem dadurch gebildeten Arbeitsrand 38.1R gezeigt.

Gemäß der Ausführungsform der Fig.5A ist die Stütze als ein Stütztisch 36T mit einer geschlossenen Stützfläche ausgebildet, wobei ein Abstand D zwischen einer Kante des Stütztisches 36T und einem Arbeitsrand 38.1R der Fräswalze 38.1 belassen ist. Der Abstand D kann durchaus im Bereich zwischen 0,5 cm und 20 cm liegen, vorzugsweise unterhalb von 10 cm, besonders vorzugsweise unterhalb von 2 cm.

Gemäß der Ausführungsform der Fig.5B besteht ein solcher Abstand nicht zwischen der Stütze und der Fräswalze 38.1. In diesem Fall ist die Stütze mindestens teilweise in Form eines Stützgitters 36G mit seitlich über Zwischenräume beabstandeten Stäben oder Barren oder dergleichen Stützelemente 36B gebildet, die in die Zwischenräume Funktionselemente ZF2 der Fräswalze 38.1 eingreifen.

Bei beiden Ausführungsformen ist entweder der Abstand D möglichst gering gehalten (Fig.5A) oder aber vermieden (Fig.5B), sodass ein Durchlassen (Bypass) von etwaig vorliegenden kleineren Bruchstücken des Trockenkuchens 35 oder des Bruchs 37 zwischen Stütze (beispielsweise ein Stütztisch 36T oder ein Stützgitter 36G) und Fräswalze 38.1 vermieden ist. Die Stütze, sei es als Stütztisch 36T oder Stützgitter 36G, hat außerdem den Vorteil, dass der Schlagdruck der Funktionselemente ZF2 der Fräswalze 38.1 von der Stütze aufgenommen wird.

Fig.6 zeigt schematisch Möglichkeiten eines grundsätzlichen Verlaufs eines Arbeitsrandes 38.1R (im Sinne einer einhüllenden Begrenzungslinie für den Arbeitsrand); beispielsweise in Ansicht A für eine in Fig.4 oder Fig.5A, Fig.5B beispielhaft gezeigte WelleZF1 der Fräswalze 38.1.

Der Arbeitsrand 38.1R folgt bei Ansicht A einem spiralförmigen grundsätzlichen Verlauf, welcher von links nach rechts gesehen im Uhrzeigersinn dreht.

Die Ansicht B der Fig.6 zeigt einen ähnlichen spiralförmigen Verlauf des Arbeitsrandes 38.1R, wobei in diesem Fall die Spirale von links nach rechts gegen den Uhrzeigersinn dreht. Je nach Drehrichtung der Fräswalze 38.1R geht damit auch eine entsprechende Förderung eines Produktstroms von abgefrästen Polymerpartikeln zur Seite einher.

Die Ansicht C der Fig.6 zeigt eine weitere Ausführungsform, bei welcher je nach Drehrichtung der Fräswalze 38.1R ein Produktstrom von abgefrästen Polymerpartikeln zur Mitte hin gefördert wird, da die spiralförmigen Verläufe für einen Arbeitsrand 38.1R auf einer linken Seite bzw. auf einer rechten Seite von der Mitte M der Fräswalze 38.1R gegenläufig ausgeführt sind. Denkbar sind weitere Ausführungsformen wie ineinandergreifende parallel verlaufende spiralförmige Arbeitslinien etc..

Fig.7A zeigt eine kumulierte Auftragung von Massenanteilen der Siebfraktionen zur graphischen Bestimmung des Massenmittel Teilchendurchmessers nach Zerkleinerung. Das Ergebnis der Messung ist in der folgenden Tabelle Tab.1 mit den Siebgrößen aufgetragen; die Werte sind in Fig.7A wiedergegeben. Der Massenmittel Teilchendurchmesser am Produktstrom 41 nach Zerkleinerung liegt bei etwa 3.0mm, was aus der Auftragung und Zuordnung eines Massenmittel Teilchendurchmessers von Partikeln für einen 50Gew.%-Wert in der Fig.7A erkennbar ist. Der Massenmittel Teilchendurchmesser nach Zerkleinerung wird nach EDANA Testmethode Nr. WSP 220.2-05 "Partikel Size Distribution" ermittelt. Für die Partikelgrößenverteilungsbestimmung am Produktstrom 41 nach Zerkleinerung werden allerdings Siebe mit den Maschenweiten 0.6 / 1 / 2 / 3.15 / 4 / 5 / 6.3 / 8 /10 /14 / 20 mm verwendet (s.u. Fraktion). Der Massenmittel Teilchendurchmesser ist hierbei der Wert der "Maschenweite", der sich für die in Fig.7A eingezeichneten kumulierten 50 Gew.-% ergibt.

**Tab.1**

| | SAP | ***Fraktion*** | SAP |
|---|---|---|---|
| ***Fraktionsgröße*** | Gem.Gew(%) | ***(*mm*)*** | Kum.Gew.(%) |
| 0-600µm | ***3,62*** | 0,6 | 3,6 |
| 600µm-1mm | ***6,55*** | 1 | 10,2 |
| 1mm-2mm | ***21,38*** | 2 | 31,6 |
| 2mm-3,15mm | ***21,52*** | 3,15 | 53,1 |
| 3,15mm-4mm | ***7,91*** | 4 | 61,0 |
| 4mm-5mm | ***8,40*** | 5 | 69,4 |
| 5mm-6,3mm | ***6,49*** | 6,3 | 75,9 |
| 6,3mm-8mm | ***7,10*** | 8 | 83,0 |
| 8mm-10mm | ***4,95*** | 10 | 87,9 |
| 10mm-14mm | ***5,39*** | 14 | 93,3 |
| 14mm-20mm | ***1,92*** | 20 | 95,2 |
| >20mm | ***4,75*** | | 100,0 |

Der Massenmittel Teilchendurchmesser nach Mahlung und Siebung wird am Produktstrom 47analog dem Massenmittel Teilchendurchmesser nach Zerkleinerung bestimmt und ist in Fig.7B gezeigt. Für die Partikelgrößenverteilungsbestimmung einer Verteilung werden allerdings Siebe mit den Maschenweiten 45 /150 / 212 / 300 / 425 / 500 / 600 / 710 / 850 µm verwendet (s.u. Fraktion). Es wurde eine Partikelgrößenverteilungsbestimmung nach Mahlung und Siebung am Produktstrom 47 an Produkten durchgeführt, die zwischen 150 und 850µm, zwischen 100 und 700µm und zwischen 100 und 600µm abgesiebt wurden.

Das jeweilige Ergebnis der Messung ist in den folgenden Tabellen mit den Siebgrößen aufgetragen; die Werte sind in Fig.7B wiedergegeben. Es ergibt sich ein Massenmittel Teilchendurchmesser nach Mahlung und Absiebung bei 150 und 850µm Produktabsiebung von 570µm (Tab.2A), bei 100 und 700µm Produktabsiebung von 425µm (Tab.2B), und bei 100 und 600µm Produktabsiebung von 348µm (Tab.2C).

**Tab.2A**

| **Produktabsiebung** | | | |
|---|---|---|---|
| **150 und 850 µm:** | | | |
| | ***SAP* (*%*)** | | **grobKum** |
| **Fraktionsgröße** | ***grob*** | **Fraktion** | **Gew.%** |
| 0-45µm | *0,1* | 45µm | 0,1 |
| 45µm-150µm | *1,6* | 150µm | 1,7 |
| 150µm-212µm | *4,0* | 212µm | 5,7 |
| 212µm-300µm | *7,6* | 300µm | 13,3 |
| 300µm-425µm | *14,1* | 425µm | 27,4 |
| 425µm-500µm | *11,0* | 500µm | 38,4 |
| 500µm-600µm | *16,9* | 600µm | 55,3 |
| 600µm-710µm | *26,9* | 710µm | 82,2 |
| 710µm-850µm | *17,7* | 850µm | 99,9 |
| >850µm | *0,1* | | 100,0 |

**Tab.2B**

| **Produktabsiebung** | | |
|---|---|---|
| **100 und 700 µm:** | | |
| | | **mittelKum** |
| **Fraktionsgröße** | ***SAP (%)* Fraktion** | **Gew.%** |
| 0-45µm | *0,0* 45µm | 0,0 |
| 45µm-150µm | *5,5* 150µm | 5,5 |
| 150µm-212µm | *7,2* 212µm | 12,7 |
| 212µm-300µm | *12,6* 300µm | 25,3 |
| 300µm-425µm | *25,1* 425µm | 50,4 |
| 425µm-500µm | *18,8* 500µm | 69,2 |
| 500µm-600µm | *20,0* 600µm | 89,2 |
| 600µm-710µm | *9,6* 710µm | 98,8 |
| | *1,2* 850µm | |
| 710µm-850µm | | 100,0 |
| >850µm | *0,0* | 100,0 |

**Tab.2C**

| **Produktabsiebung** | | |
|---|---|---|
| **100 und 600 µm:** | | |
| | | **feinKum** |
| **Fraktionsgröße** | ***SAP (%)* Fraktion** | **Gew.%** |
| 0-45µm | *0,0* 45µm | 0,0 |
| 45µm-150µm | *2,8* 150µm | 2,8 |
| 150µm-212µm | *11,4* 212µm | 14,2 |
| 212µm-300µm | *21,5* 300µm | 35,7 |
| 300µm-425µm | *38,0* 425µm | 73,7 |
| 425µm-500µm | *16,2* 500µm | 89,9 |
| 500µm-600µm | *8,6* 600µm | 98,5 |
| 600µm-710µm | *1,4* 710µm | 99,9 |
| 710µm-850µm | *0,1* 850µm | 100,0 |
| >850µm | *0,0* | 100,0 |

### Bezugszeichen:

- 31: Edukte
- 30: Reaktor
- 33: Klumpen
- 32: Gelbunker
- 34: Fördermittel
- 35: Trockenkuchen
- 35C: Oberkante
- 35D: Dicke des Trockenkuchens 35
- 36: Bandtrockner
- 36A: Trockneraufbau
- 36F: Förderband
- 36U: Umlenkrolle
- 37: Bruch des Trockenkuchens 35
- 37C: Oberkante
- 37D: Dicke des Bruchs 37
- F: Aufnahmefläche
- 36T: Stütztisch
- 36G: Stützgitter
- 36B: seitlich über Zwischenräume beabstandete Stäbe oder Barren oder dergleichen Stützelemente eines Stützgitters 36G
- 38: Zerkleinerungsanordnung
- 38.1: Fräswalze
- 38.1R: Arbeitsrand
- 38.1A: Achse
- 38.2: weiteres Zerkleinerungs- und/oder Führungs-Element der Zerkleinerungsanordnung
- H: obere Arbeitslinie
- h: untere Arbeitslinie
- R1: Drehrichtung einer Umlenkrolle 36U
- R2: Drehrichtung einer rotierbaren Welle ZF1
- R: Radius der Fräswalze 38.1
- D: Abstand der Fräswalze 38.1 vom Ende der Stütze
- 40: Förderschnecke
- 41: Polymerpartikel im Hauptstrom
- 42: pneumatische Förderung
- 43: Produktstrom in pneumatischer Förderung
- 39, 45, 47: zerkleinerte (39) und gemahlene (45) und gesiebte (47) Polymerpartikel
- 44: Mahlung
- 46: Siebvorrichtung
- ZF: Zerkleinerungsfräse
- ZF1: rotierbare Welle der Zerkleinerungsfräse
- ZF2: Funktionselemente der Zerkleinerungsfräse

## Patentansprüche

1. Bandtrockneranordnung zum Trocknen eines wässrigen Polymergels und zum Zerkleinern des getrockneten Polymergels zu getrockneten Polymerpartikeln, aufweisend:
- einen Bandtrockner (36) mit einem Trockneraufbau (36A) und einem Förderband (36F) zur Aufnahme und zum Trocknen des wässrigen Polymergels zu einem Trockenkuchen (35) oder Bruch (37) auf einer Aufnahmefläche (F) des Förderbandes (36F),
- eine Zerkleinerungsanordnung (38), die in Produktstromrichtung nach dem Trockneraufbau zum Zerkleinern des getrockneten Polymergels des Trockenkuchens (35) oder Bruchs (37) zu getrockneten zerkleinerten Polymerpartikeln (39) angeordnet ist, wobei
- die Zerkleinerungsanordnung (38) einen Zerkleinerer aufweist, der als eine Fräswalze (38.1) gebildet ist, und
- die Fräswalze (38.1) mit einer oberen Arbeitslinie (H) eines Arbeitsrandes (38.1R) der Fräswalze (38.1) auf Höhe oder oberhalb einer Aufnahmefläche (F) eines Förderbandes (36F), zur fräsenden Bearbeitung des Trockenkuchens (35) oder des Bruchs (37), angeordnet ist, wobei die Fräswalze (38.1) zum Abwurf von abgefrästen, zerkleinerten getrockneten Polymerpartikeln (39) des Trockenkuchens (35) oder des Bruchs (37) nach unten ausgebildet ist,
**dadurch gekennzeichnet, dass** zwischen dem Förderband (36F) und der Fräswalze (38.1), in Verlängerung des Förderbandes, eine Stütze (36T, 36G) für den Trockenkuchen (35) oder für den Bruch (37) angeordnet ist,
wobei die Stütze so angeordnet ist, dass ein vorderer Abstand zwischen einer vorderen Kante der Stütze und einem hinteren Ende des Förderbandes (36F) belassen ist.

2. Bandtrockneranordnung nach Anspruch 1, **dadurch gekennzeichnet, dass**
- die Fräswalze (38.1) eine rotierbare Welle (ZF1) mit Funktionselementen (ZF2) aufweist und das Förderband (36F) eine Umlenkrolle (36U) aufweist, wobei die rotierbare Welle (ZF1) zum Rotieren mit einer Drehrichtung (R2) entgegen eine Drehrichtung (R1) der Umlenkrolle (36U) ausgebildet ist.

3. Bandtrockneranordnung nach Anspruch 1 oder 2, **dadurch gekennzeichnet, dass** eine Achse (38.1A) der Fräswalze (38.1) auf Höhe oder unterhalb der Höhe der Aufnahmefläche (F) des Förderbandes (36F) angebracht ist.

4. Bandtrockneranordnung nach einem der Ansprüche 1 bis 3, **dadurch gekennzeichnet, dass**
- eine untere Arbeitslinie (h) der Fräswalze (38.1) unterhalb einer Aufnahmefläche (F) des Förderbandes (36F) liegt, und/oder
- die obere Arbeitslinie (H) der Fräswalze (38.1) einen oberen Abstand zur Aufnahmefläche (F) des Förderbandes hat und der obere Abstand oberhalb der Höhe der Aufnahmefläche (F) des Förderbandes wenigstens 5cm, vorzugsweise wenigstens 8cm, vorzugsweise wenigstens 10cm beträgt.

5. Bandtrockneranordnung nach einem der Ansprüche 1 bis 4, **dadurch gekennzeichnet, dass**
- die Stütze als ein Stütztisch (36T) mit einer geschlossenen Stützfläche ausgebildet ist, wobei ein hinterer Abstand (D) zwischen einer hinteren Kante des Stütztisches (36T) und einem vorderen Arbeitsrand (38.1R) der Fräswalze (38.1) belassen ist, oder
- die Stütze als ein Stützgitter (36G) gebildet ist, das seitlich über Zwischenräume beabstandete Stützelemente (36B), insbesondere Stäbe, Barren Stangen oder dergleichen, aufweist, oder
- ein vorderer Teil der Stütze als ein Stütztisch mit einer geschlossenen Stützfläche ausgebildet ist und ein hinterer Teil der Stütze als ein Stützgitter gebildet ist, das seitlich, über Zwischenräume, beabstandete Stützelemente, insbesondere Stäbe, Barren Stangen oder dergleichen, aufweist.

6. Bandtrockneranordnung nach Anspruch 5, **dadurch gekennzeichnet, dass** in die Zwischenräume von beabstandeten Stützelementen (36B) eines Stützgitters (36G) Funktionselemente (ZF2) der Fräswalze (38.1) eingreifen können.

7. Bandtrockneranordnung nach einem der Ansprüche 1 bis 6, **dadurch gekennzeichnet, dass** die Zerkleinerungsanordnung, zusätzlich zur Fräswalze (38.1) und einer optionalen Förderschnecke (40), ein weiteres Zerkleinerungs- und/oder Führungs-Element (38.2), insbesondere einen weiteren Zerkleinerer und/oder ein Umlenkmittel, aufweist.

8. Bandtrockneranordnung nach einem der Ansprüche 1 bis 7, **dadurch gekennzeichnet, dass**
- eine Anzahl von Funktionselementen (ZF2) der Fräswalze (38.1) als eine Anzahl von Stäben, Zähnen, Barren, Schaufelflächen oder Zahn-, Zacken- oder Rändel-Stegen oder
- rändern, insbesondere Zahnspiralen oder Rändelschrauben, gebildet ist.

9. Bandtrockneranordnung nach einem der Ansprüche 1 bis 8, **dadurch gekennzeichnet, dass** die Fräswalze (38.1) eine Anzahl von Funktionselemente (ZF2) aufweist, die unter Bildung eines Arbeitsrandes (38.1R) entlang einem grundsätzlichen Verlauf einer Spirale angeordnet sind.

10. Bandtrockneranordnung nach Anspruch 9, **dadurch gekennzeichnet, dass**
- die Spirale einen Gewindegang mit einem Gangwinkel zwischen 20° bis 70° aufweist, und/oder
- die Spirale einen einzigen Gewindegang hat oder die Spirale mehrere gleichgerichtete oder gegenläufige, insbesondere separate oder ineinandergreifende, Gewindegänge hat.

11. Verfahren zum Trocknen eines wässrigen Polymergels und zum Zerkleinern des getrockneten Polymergels zu getrockneten Polymerpartikeln mit einer Bandtrockneranordnung nach einem der Ansprüche 1 bis 10, nämlich aufweisend:
- einen Bandtrockner (36) mit einem Trockneraufbau (36A) und einem Förderband (36F) zur Aufnahme und zum Trocknen des wässrigen Polymergels zu einem Trockenkuchen (35) oder Bruch (37) auf einer Aufnahmefläche (F) des Förderbandes (36F),
- eine Zerkleinerungsanordnung (38), die in Produktstromrichtung nach dem Trockneraufbau zum Zerkleinern des getrockneten Polymergels des Trockenkuchens (35) oder Bruchs (37) zu getrockneten zerkleinerten Polymerpartikeln (39) angeordnet ist, wobei
- die Zerkleinerungsanordnung (38) einen Zerkleinerer aufweist, und in dem Verfahren:
- das getrocknete Polymergel des Trockenkuchens (35) zu getrockneten zerkleinerten Polymerpartikeln (39) zerkleinert wird, wobei
- der Zerkleinerer als eine Fräswalze (38.1) gebildet ist, und
- die Fräswalze (38.1) mit einer oberen Arbeitslinie (H) eines Arbeitsrandes (38.1R) der Fräswalze (38.1) auf oder oberhalb einer Aufnahmefläche(F) eines Förderbandes (36F) angeordnet ist, wobei der Trockenkuchen (35) oder der Bruch (37) fräsend bearbeitet wird und die Fräswalze (38.1) die abgefrästen, zerkleinerten getrockneten Polymerpartikeln (39) des Trockenkuchens (35) oder Bruchs (37) nach unten abwirft,
**dadurch gekennzeichnet, dass**
zwischen dem Förderband (36F) und der Fräswalze (38.1), in Verlängerung des Förderbandes, eine Stütze für den Trockenkuchen (35) oder für den Bruch (37) angeordnet ist, wobei die Stütze so angeordnet ist, dass ein vorderer Abstand zwischen einer vorderen Kante der Stütze und einem hinteren Ende des Förderbandes (36F) belassen ist.

12. Verfahren nach Anspruch 11, **dadurch gekennzeichnet, dass**
- ein Radius (r) der Fräswalze (38.1) größer oder gleich der Dicke (35D, 37D) des Trockenkuchens (35) oder des Bruchs (37) ist, und/oder
- die obere Arbeitslinie (H) der Fräswalze (38.1) oberhalb einer Oberkante (35C) des Trockenkuchens oder oberhalb einer Oberkante (37C) des Bruchs (37) liegt.

13. Verfahren nach Anspruch 11 oder 12, **dadurch gekennzeichnet, dass**
- die Fräswalze der Zerkleinerungsanordnung (38), den Trockenkuchen zu getrockneten Polymerpartikeln zerkleinert, wobei die zerkleinerten getrockneten Polymerpartikel einen Massenmittel-Teilchendurchmesser zwischen 0.5mm und 10mm, bevorzugt zwischen 1mm und 9mm, insbesondere zwischen 1 und 5mm aufweisen, und/oder
- eine Verweilzeit von Polymerpartikeln in der Zerkleinerungsanordnung (38) unterhalb von 90sec. liegt.

14. Verfahren nach einem der Ansprüche 11 bis 13, **dadurch gekennzeichnet, dass**
- die Polymerpartikel in der Zerkleinerungsanordnung, bei einer Temperatur zwischen 40°C und 140°C, insbesondere zwischen 60°C und 120°C, vorzugsweise zwischen 80°C und 120°C, zerkleinert werden.

15. Verfahren nach einem der Ansprüche 11 bis 14, **dadurch gekennzeichnet, dass**
- die Welle (ZF1) der Fräswalze (38.1) mit einer Umdrehungsgeschwindigkeit von mehr als 50U/min und weniger als 250U/min rotiert (R2).

16. Herstellungsverfahren zur Herstellung wasserabsorbierender Polymerpartikel, aufweisend die Schritte:
- Polymerisation einer Monomer-Lösung oder-Suspension zu wasserabsorbierenden Polymerpartikeln eines wässrigen Polymergels, wobei die Lösung enthält
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und optional ein oder mehrere wasserlösliche Polymere,
- Fördern des wässrigen Polymergels zu einer Bandtrockneranordnung,
- Trocknen des wässrigen Polymergels und Zerkleinern des getrockneten Polymergels zu getrockneten Polymerpartikeln nach einem Verfahren gemäß einem der Ansprüche 11 bis 15 mit der Bandtrockneranordnung nach einem der Ansprüche 1 bis 10, wobei zwischen dem Förderband (36F) und der Fräswalze (38.1), in Verlängerung des Förderbandes, eine Stütze für den Trockenkuchen (35) oder für den Bruch (37) angeordnet ist, wobei die Stütze so angeordnet ist, dass ein vorderer Abstand zwischen einer vorderen Kante der Stütze und einem hinteren Ende des Förderbandes (36F) belassen ist, und das Verfahren weiter aufweist:
- optional Mahlen und/oder Klassieren der getrockneten und zerkleinerten Polymerpartikel.

## Claims

1. A belt drier arrangement for drying an aqueous polymer gel and for comminuting the dried polymer gel to give dried polymer particles, having:
- a belt drier (36) having a drier setup (36A) and a conveyor belt (36F) for receiving and for drying the aqueous polymer gel to give a dry cake (35) or fragments (37) on a receiving surface (F) of the conveyor belt (36F),
- a comminution arrangement (38), disposed downstream of the drier setup in product flow direction, for comminution of the dried polymer gel of the dry cake (35) or fragments (37) to give dried comminuted polymer particles (39), where
- the comminution arrangement (38) has a comminutor in the form of a milling drum (38.1), and
- the milling drum (38.1) is disposed with an upper working line (H) of a working edge (38.1R) of the milling drum (38.1) at the level of or above a receiving surface (F) of a conveyor belt (36F), for mill processing of the dry cake (35) or of the fragments (37), where the milling drum (38.1) is adapted to eject milled comminuted dried polymer particles (39) of the dry cake (35) or of the fragments (37) in the downward direction,
**characterized in that**
a support (36T, 36G) for the dry cake (35) or for the fragments (37) is disposed between the conveyor belt (36F) and the milling drum (38.1), in an extension of the conveyor belt,
where the support is arranged such that a front margin is left between a front edge of the support and a rear edge of the conveyor belt (36F).

2. The belt drier arrangement according to claim 1, wherein
- the milling drum (38.1) has a rotatable shaft (ZF1) with functional elements (ZF2) and the conveyor belt (36F) has a deflecting roll (36U), the rotatable shaft (ZF1) having been designed to rotate with a direction of rotation (R2) counter to a direction of rotation (R1) of the deflecting roll (36U).

3. The belt drier arrangement according to claim 1 or 2, wherein an axis (38.1A) of the milling drum (38.1) is mounted at the level of or below the level of the receiving surface (F) of the conveyor belt (36F).

4. The belt drier arrangement according to any of claims 1 to 3, wherein
- a lower working line (h) of the milling drum (38.1) is below a receiving surface (F) of the conveyor belt (36F), and/or
- the upper working line (H) of the milling drum (38.1) has an upper margin from the receiving surface (F) of the conveyor belt and the upper margin above the level of the receiving surface (F) of the conveyor belt is at least 5 cm, preferably at least 8 cm, preferably at least 10 cm.

5. The belt drier arrangement according to any of claims 1 to 4, wherein
- the support is designed as a support table (36T) with a closed support face, leaving a rear margin (D) between a rear edge of the support table (36T) and a front working edge (38.1R) of the milling drum (38.1), or
- the support takes the form of a support grid (36G) having laterally interspaced support elements (36B), especially rods, bars, poles or the like, or
- a front part of the support is designed as a support table with a closed support face and a rear part of the support takes the form of a support grid having laterally interspaced support elements, especially rods, bars, poles or the like.

6. The belt drier arrangement according to claim 5, wherein functional elements (ZF2) on the milling drum (38.1) can mesh into the interspaces between support elements (36B) of a support grid (36G).

7. The belt drier arrangement according to any of claims 1 to 6, wherein the comminution arrangement, in addition to the milling drum (38.1) and an optional conveying screw (40), has a further comminution element and/or guide element (38.2), especially a further comminutor and/or a deflecting means.

8. The belt drier arrangement according to any of claims 1 to 7, wherein
- a number of functional elements (ZF2) on the milling drum (38.1) takes the form of a number of rods, teeth, bars, paddle surfaces or toothed, zigzag or knurled elements or edges, especially toothed spirals or knurled screws.

9. The belt drier arrangement according to any of claims 1 to 8, wherein the milling drum (38.1) has a number of functional elements (ZF2) arranged along a basic profile of a spiral to form a working edge (38.1R).

10. The belt drier arrangement according to claim 9, wherein
- the spiral has a screw flight with a flight angle between 20° and 70°, and/or
- the spiral has a single screw flight or the spiral has multiple uniformly directed or opposing, especially separate or intermeshing, screw flights.

11. A method of drying an aqueous polymer gel and of comminuting the dried polymer gel to give dried polymer particles with a belt drier arrangement according to any of claims 1 to 10, namely having:
- a belt drier (36) having a drier setup (36A) and a conveyor belt (36F) for receiving and for drying the aqueous polymer gel to give a dry cake (35) or fragments (37) on a receiving surface (F) of the conveyor belt (36F),
- a comminution arrangement (38), disposed downstream of the drier setup in product flow direction, for comminution of the dried polymer gel of the dry cake (35) or fragments (37) to give dried comminuted polymer particles (39), where
- the comminution arrangement (38) has a comminutor, and, in the method:
- the dried polymer gel of the dry cake (35) is comminuted to give dried comminuted polymer particles (39), where
- the comminutor takes the form of a milling drum (38.1), and
- the milling drum (38.1) is disposed with an upper working line (H) of a working edge (38.1R) of the milling drum (38.1) at the level of or above a receiving surface (F) of a conveyor belt (36F), where the dry cake (35) or the fragments (37) are processed by milling and the milling drum (38.1) ejects the milled comminuted dried polymer particles (39) of the dry cake (35) or fragments (37) in the downward direction,
**characterized in that**
a support for the dry cake (35) or for the fragments (37) is disposed between the conveyor belt (36F) and the milling drum (38.1), in an extension of the conveyor belt, where the support is arranged such that a front margin is left between a front edge of the support and a rear edge of the conveyor belt (36F).

12. The method according to claim 11, wherein
- a radius (r) of the milling drum (38.1) is greater than or equal to the thickness (35D, 37D) of the dry cake (35) or the fragments (37), and/or
- the upper working line (H) of the milling drum (38.1) is above an upper edge (35C) of the dry cake or above an upper edge (37C) of the fragments (37).

13. The method according to claim 11 or 12, wherein
- the milling drum of the comminution arrangement (38) is designed to comminute the dry cake to give dried polymer particles, where the comminuted dried polymer particles have a mass-average particle diameter between 0.5 mm and 10 mm, preferably between 1 mm and 9 mm, especially between 1 and 5 mm, and/or
- a dwell time of polymer particles in the comminution arrangement (38) is below 90 sec.

14. The method according to any of claims 11 to 13, wherein
- the polymer particles are comminuted in the comminution arrangement at a temperature between 40°C and 140°C, especially between 60°C and 120°C, preferably between 80°C and 120°C.

15. The method according to any of claims 11 to 14, wherein
- the shaft (ZF1) of the milling drum (38.1) rotates (R2) at a speed of rotation of more than 50 rpm and less than 250 rpm.

16. A production method for production of water-absorbing polymer particles, having the steps of:
- polymerizing a monomer solution or suspension to give water-absorbing polymer particles of an aqueous polymer gel, where the solution comprises
a) at least one ethylenically unsaturated monomer which bears acid groups and may have been at least partly neutralized,
b) at least one crosslinker,
c) at least one initiator,
d) optionally one or more ethylenically unsaturated monomers copolymerizable with the monomers mentioned under a) and optionally one or more water-soluble polymers,
- conveying the aqueous polymer gel to a belt drier arrangement,
- drying the aqueous polymer gel and comminuting the dried polymer gel to give dried polymer particles by a method according to any of claims 11 to 15 with the belt drier arrangement according to any of claims 1 to 10, where a support for the dry cake (35) or for the fragments (37) is disposed between the conveyor belt (36F) and the milling drum (38.1), in an extension of the conveyor belt, where the support is arranged such that a front margin is left between a front edge of the support and a rear edge of the conveyor belt (36F), and the method further comprises:
- optionally grinding and/or classifying the dried and comminuted polymer particles.

## Revendications

1. Agencement de sécheur à bande pour le séchage d'un gel polymère aqueux et pour le broyage du gel polymère séché en particules polymères séchées, comprenant :
- un sécheur à bande (36) muni d'une structure de sécheur (36A) et d'une bande de transport (36F) pour la réception et pour le séchage du gel polymère aqueux en un gâteau séché (35) ou une fraction (37) sur une surface de réception (F) de la bande de transport (36F),
- un agencement de broyage (38), qui est agencé dans la direction d'écoulement du produit après la structure de sécheur pour le broyage du gel polymère séché du gâteau séché (35) ou de la fraction (37) en particules polymères broyées séchées (39),
- l'agencement de broyage (38) comprenant un broyeur, qui est configuré sous la forme d'un cylindre de fraisage (38.1), et
- le cylindre de fraisage (38.1) étant agencé avec une ligne de travail supérieure (H) d'un bord de travail (38.1R) du cylindre de fraisage (38.1) à la hauteur ou au-dessus d'une surface de réception (F) d'une bande de transport (36F), pour l'usinage par fraisage du gâteau séché (35) ou de la fraction (37), le cylindre de fraisage (38.1) étant configuré pour le largage vers le bas de particules polymères séchées broyées éliminées par fraisage (39) du gâteau séché (35) ou de la fraction (37),
**caractérisé en ce que**
un appui (36T, 36G) pour le gâteau séché (35) ou pour la fraction (37) est agencé entre la bande de transport (36F) et le cylindre de fraisage (38.1), dans le prolongement de la bande de transport, l'appui étant agencé de manière à laisser une distance avant entre un bord avant de l'appui et une extrémité arrière de la bande de transport (36F).

2. Agencement de sécheur à bande selon la revendication 1, **caractérisé en ce que**
- le cylindre de fraisage (38.1) comprend un arbre rotatif (ZF1) muni d'éléments fonctionnels (ZF2) et la bande de transport (36F) comprend une poulie de déviation (36U), l'arbre rotatif (ZF1) étant configuré pour tourner avec une direction de rotation (R2) opposée à une direction de rotation (R1) de la poulie de déviation (36U).

3. Agencement de sécheur à bande selon la revendication 1 ou 2, **caractérisé en ce qu'**un axe (38.1A) du cylindre de fraisage (38.1) est disposé à la hauteur ou en dessous de la hauteur de la surface de réception (F) de la bande de transport (36F).

4. Agencement de sécheur à bande selon l'une quelconque des revendications 1 à 3, **caractérisé en ce que**
- une ligne de travail inférieure (h) du cylindre de fraisage (38.1) se situe en dessous d'une surface de réception (F) de la bande de transport (36F), et/ou
- la ligne de travail supérieure (H) du cylindre de fraisage (38.1) a une distance supérieure par rapport à la surface de réception (F) de la bande de transport et la distance supérieure au-dessus de la hauteur de la surface de réception (F) de la bande de transport est d'au moins 5 cm, de préférence d'au moins 8 cm, de préférence d'au moins 10 cm.

5. Agencement de sécheur à bande selon l'une quelconque des revendications 1 à 4, **caractérisé en ce que**
- l'appui est configuré sous la forme d'une table d'appui (36T) ayant une surface d'appui fermée, une distance arrière (D) étant laissée entre un bord arrière de la table d'appui (36T) et un bord de travail avant (38.1R) du cylindre de fraisage (38.1), ou
- l'appui étant configuré sous la forme d'une grille d'appui (36G), qui comprend des éléments d'appui (36B) espacés latéralement par l'intermédiaire d'espaces intermédiaires, notamment des baguettes, des barres, des tiges ou analogues, ou
- une partie avant de l'appui est configuré sous la forme d'une table d'appui ayant une surface d'appui fermée et une partie arrière de l'appui est configuré sous la forme d'une grille d'appui, qui comprend des éléments d'appui espacés latéralement par l'intermédiaire d'espaces intermédiaires, notamment des baguettes, des barres, des tiges ou analogues.

6. Agencement de sécheur à bande selon la revendication 5, **caractérisé en ce que** des éléments fonctionnels (ZF2) du cylindre de fraisage (38.1) peuvent pénétrer dans les espaces intermédiaires d'éléments d'appui espacés (36B) d'une grille d'appui (36G).

7. Agencement de sécheur à bande selon l'une quelconque des revendications 1 à 6, **caractérisé en ce que** l'agencement de broyage comprend, en plus du cylindre de fraisage (38.1) et d'une vis de transport optionnelle (40), un élément de broyage et/ou de guidage supplémentaire (38.2), notamment un broyeur supplémentaire et/ou un moyen de déviation.

8. Agencement de sécheur à bande selon l'une quelconque des revendications 1 à 7, **caractérisé en ce que**
- un nombre d'éléments fonctionnels (ZF2) du cylindre de fraisage (38.1) est formé par un nombre de baguettes, de dents, de barres, de surfaces d'aubes ou d'arêtes ou de bords dentés, dentelés ou moletés, notamment de spirales dentées ou de vis moletées.

9. Agencement de sécheur à bande selon l'une quelconque des revendications 1 à 8, **caractérisé en ce que** le cylindre de fraisage (38.1) comprend un nombre d'éléments fonctionnels (ZF2), qui sont agencés en formant un bord de travail (38.1R) le long d'une trajectoire de base d'une spirale.

10. Agencement de sécheur à bande selon la revendication 9, **caractérisé en ce que**
- la spirale présente un pas de filetage ayant un angle de pas entre 20° et 70°, et/ou
- la spirale a un pas de filetage unique ou la spirale a plusieurs pas de filetage orientés dans le même sens ou en sens opposé, notamment séparés ou imbriqués les uns dans les autres.

11. Procédé de séchage d'un gel polymère aqueux et de broyage du gel polymère séché en particules polymères séchées avec un agencement de sécheur à bande selon l'une quelconque des revendications 1 à 10, à savoir comprenant :
- un sécheur à bande (36) muni d'une structure de sécheur (36A) et d'une bande de transport (36F) pour la réception et pour le séchage du gel polymère aqueux en un gâteau séché (35) ou une fraction (37) sur une surface de réception (F) de la bande de transport (36F),
- un agencement de broyage (38), qui est agencé dans la direction d'écoulement du produit après la structure de sécheur pour le broyage du gel polymère séché du gâteau séché (35) ou de la fraction (37) en particules polymères broyées séchées (39),
- l'agencement de broyage (38) comprenant un broyeur, et dans le procédé :
- le gel polymère séché du gâteau séché (35) étant broyé en particules polymères broyées séchées (39),
- le broyeur étant configuré sous la forme d'un cylindre de fraisage (38.1), et
- le cylindre de fraisage (38.1) étant agencé avec une ligne de travail supérieure (H) d'un bord de travail (38.1R) du cylindre de fraisage (38.1) sur ou au-dessus d'une surface de réception (F) d'une bande de transport (36F), le gâteau séché (35) ou la fraction (37) étant usiné par fraisage et le cylindre de fraisage (38.1) larguant vers le bas les particules polymères séchées broyées éliminées par fraisage (39) du gâteau séché (35) ou de la fraction (37),
**caractérisé en ce que**
un appui pour le gâteau séché (35) ou pour la fraction (37) est agencé entre la bande de transport (36F) et le cylindre de fraisage (38.1), dans le prolongement de la bande de transport, l'appui étant agencé de manière à laisser une distance avant entre un bord avant de l'appui et une extrémité arrière de la bande de transport (36F).

12. Procédé selon la revendication 11, **caractérisé en ce que**
- un rayon (r) du cylindre de fraisage (38.1) est supérieur ou égal à l'épaisseur (35D, 37D) du gâteau séché (35) ou de la fraction (37), et/ou
- la ligne de travail supérieure (H) du cylindre de fraisage (38.1) se situe au-dessus d'un bord supérieur (35C) du gâteau séché ou au-dessus d'un bord supérieur (37C) de la fraction (37).

13. Procédé selon la revendication 11 ou 12, **caractérisé en ce que**
- le cylindre de fraisage de l'agencement de broyage (38) broie le gâteau séché en particules polymères séchées, les particules polymères séchées broyées présentant un diamètre de particule moyen en masse compris entre 0,5 mm et 10 mm, de préférence entre 1 mm et 9 mm, notamment entre 1 et 5 mm, et/ou
- un temps de séjour de particules polymères dans l'agencement de broyage (38) est inférieur à 90 secondes.

14. Procédé selon l'une quelconque des revendications 11 à 13, **caractérisé en ce que**
- les particules polymères sont broyées dans l'agencement de broyage à une température comprise entre 40 °C et 140 °C, notamment entre 60 °C et 120 °C, de préférence entre 80 °C et 120 °C.

15. Procédé selon l'une quelconque des revendications 11 à 14, **caractérisé en ce que**
- l'arbre (ZF1) du cylindre de fraisage (38.1) tourne à une vitesse de rotation supérieure à 50 tours/minute et inférieure à 250 tours/minute (R2).

16. Procédé de fabrication pour la fabrication de particules polymères absorbant l'eau, comprenant les étapes suivantes :
- la polymérisation d'une solution ou suspension de monomère en particules polymères absorbant l'eau d'un gel polymère aqueux, la solution contenant :
a) au moins un monomère éthyléniquement insaturé, portant des groupes acides, qui peut être au moins partiellement neutralisé,
b) au moins un agent de réticulation,
c) au moins un initiateur,
d) éventuellement un ou plusieurs monomères éthyléniquement insaturés copolymérisables avec les monomères indiqués en a) et éventuellement un ou plusieurs polymères solubles dans l'eau,
- le transport du gel polymère aqueux jusqu'à un agencement de sécheur à bande,
- le séchage du gel polymère aqueux et le broyage du gel polymère séché en particules polymères séchées par un procédé selon l'une quelconque des revendications 11 à 15 avec l'agencement de sécheur à bande selon l'une quelconque des revendications 1 à 10, un appui pour le gâteau séché (35) ou pour la fraction (37) étant agencé entre la bande de transport (36F) et le cylindre de fraisage (38.1), dans le prolongement de la bande de transport, l'appui étant agencé de manière à laisser une distance avant entre un bord avant de l'appui et une extrémité arrière de la bande de transport (36F), et
le procédé comprenant en outre :
- éventuellement le meulage et/ou la classification des particules polymères séchées et broyées.
